# EUROPÄISCHE PATENTSCHRIFT

(11) **EP 3 747 334 B1**
(45) Veröffentlichungstag und Bekanntmachung des Hinweises auf die Patenterteilung: **10.07.2024**
(21) Anmeldenummer: 20173210.4
(22) Anmeldetag: 06.05.2020
(51) Int. Cl.: A47L 15/00, A47L 15/42

(54) **HAUSHALTSGESCHIRRSPÜLMASCHINE MIT ZUMINDEST EINER WÄRMEPUMPE**
DOMESTIC DISHWASHER WITH AT LEAST ONE HEAT PUMP
LAVE-VAISSELLE ÉLECTROMÉNAGER POURVU D'AU MOINS UNE POMPE À CHALEUR

(30) Priorität: 03.06.2019 EP 19382458
(43) Veröffentlichungstag der Anmeldung: 09.12.2020
(73) Patentinhaber: BSH Hausgeräte GmbH, 81739 München (DE)
(72) Erfinder: Casado Carlino, Sergio, 31621 Sarriguren (ES); Merino Alcaide, Eloy, 31621 Sarriguren (ES); Sagües García, Xabier, 31001 Pamplona (ES); Vereda Ortiz, Ciro Sebastián, 31014 Pamplona (ES)

(56) Entgegenhaltungen:
- EP-A1- 2 921 098
- EP-A1- 3 141 176
- WO-A1-2018/215343
- WO-A1-2019/043532

## Beschreibung

Die vorliegende Erfindung betrifft eine Haushaltsgeschirrspülmaschine mit einem Spülbehälter zur Aufnahme von Geschirr, Gläsern, Bestecken oder ähnlichem Spülgut, und mit zumindest einer Wärmepumpe nach dem Oberbegriff des Anspruchs 1 sowie ein Verfahren nach dem Oberbegriff des Anspruchs 15.

Für den Betrieb eines Haushaltsgeräts, etwa einer Geschirrspülmaschine, ist es wichtig, einen möglichst geringen Energie- und Wasserbedarf vorzusehen und somit auch künftige gesetzliche Anforderungen erfüllen zu können und auch bei der Auszeichnung mit einem Energieverbrauchslabel eine möglichst günstige Einstufung zu erhalten. Es hat sich gezeigt, dass hierfür die Ausstattung eines Haushaltsgeräts mit einer Wärmepumpe einen möglichen Weg bietet. Eine solche Anordnung ist beispielsweise aus der EP 2 215 954 B1 bekannt. Es ist dabei von großer Bedeutung, durch den Einsatz einer Wärmepumpe erreichte Vorteile nicht durch einen hierfür benötigten zu hohen Wasserbedarf wieder teilweise aufzuheben.

Die WO 2019/043532 A1 zeigt die Möglichkeit, zwei flache Tanks (äußerer Tankabschnitt, zweiter, weiter innen liegender Tankabschnitt) seitlich des Spülbehälters vorzusehen, die jedoch in für den Wärmepumpeneinsatz üblicher Weise innerhalb eines Spülgangs mehrfach befüllt und entleert werden.

Die EP 3 141 176 A1 zeigt eine Geschirrspülmaschine, die einen einzigen, einteiligen und zusammenhängenden Frischwassertank aufweist, der je nach Ventilstellung sowohl mit einem äußeren Wasserhahn (zur Befüllung des Frischwassertanks) als auch mit dem Spülbehälter (ausschließlich zur Entleerung des Frischwassertanks) in Verbindung steht. Dabei wird auch während des Spülgangs der Frischwassertank in den Spülbehälter entleert und muss danach neu befüllt werden.

Der Erfindung liegt daher das Problem zugrunde, eine Wärmepumpe eines Haushaltsgeräts möglichst wassereffizient nutzen zu können.

Die Erfindung löst das Problem durch einen Gegenstand mit den Merkmalen des Anspruchs 1 und ein Verfahren nach Anspruch 15. Hinsichtlich vorteilhafter Ausgestaltungen und Weiterbildungen der Erfindung wird auf die Ansprüche 2 bis 14 und 16 bis 21 verwiesen.

Dadurch, dass erfindungsgemäß die Haushaltsgeschirrspülmaschine zumindest zwei im Wesentlichen flache Tanks enthält, von denen zumindest einer ein innerer Tank zwischen einem äußeren Tank und dem Spülbehälter ist und entweder bei Befüllung mit Flüssigkeit als Wärmekoppler zum Spülbehälter hin oder bei Befüllung mit Luft als thermischer Isolator zum Spülbehälter hin verwendbar ist, und wobei in dem zumindest einen äußeren Tank Teile des Verdampfers angeordnet sind, wobei der zumindest eine äußere Tank im Spülgang sämtliche Flüssigkeit, die zu Beginn des während des Spülgangs erstmaligen Betriebs der Wärmepumpe in ihm enthalten ist, bis zum Ende des jeweiligen Spülgangs dort behält, ist ein sehr sparsamer Umgang mit der dort gesammelten Flüssigkeit, insbesondere enthärtetem Wasser, gegeben. Das Wasser aus dem äußeren Tank oder den äußeren Tanks wird dadurch nicht verschwendet. Während des Spülgangs des jeweilig durchzuführenden Geschirrspülprogramms findet im Zeitraum zwischen dem erstmaligen Start der Wärmepumpe bis zum Ende des Spülgangs des jeweilig durchzuführenden Geschirrspülprogramms keine Entleerung der Flüssigkeit, insbesondere des enthärteten Frischwassers, aus dem jeweiligen äußeren Tank statt. Insbesondere wird die Flüssigkeit, die während des jeweiligen Spülgangs zum Zeitpunkt der Erstinbetriebnahme der Wärmepumpe im jeweiligen äußeren Tank enthalten ist, bis zum Ende des Spülgangs nicht über eine Entleerungsleitung der Haushaltsgeschirrspülmaschine in ein hausseitiges Abwasserrohr entleert. Ein Nachfüllen des jeweiligen äußeren Tanks ist ab der während des jeweiligen Spülgangs ersten Inbetriebnahme der Wärmepumpe bis zum Ende des Spülgangs entbehrlich; ein Nachfüllen des jeweiligen äußeren Tanks mit Flüssigkeit, insbesondere enthärtetem Frischwasser, unterbleibt während dieses Zeitraums, insbesondere vom Startzeitpunkt der Erstinbetriebnahme der Wärmepumpe bis zum Endzeitpunkt des Spülgangs. Auf diese Weise ist ab dem Zeitpunkt der erstmaligen Inbetriebnahme der Wärmepumpe während des Spülgangs eines jeweilig durchzuführenden Geschirrspülprogramms durch den Verzicht auf zwischenzeitliche Befüll- und Entleervorgänge für den jeweiligen äußeren Tank ein Zeitaufwand für diese vermieden. Der Spülgang kann insgesamt beschleunigt werden. Da erfindungsgemäß die am Ende des jeweiligen Spülgangs in dem zumindest einen äußeren Tank enthaltene Flüssigkeit zumindest teilweise in einem nächsten Spülgang als Teil der Spülflotte bzw. Spülflüssigkeit zu einem Vorspülen des Spülguts nutzbar und in den Spülbehälter einleitbar ist, ist auch über mehrere Spülgänge ein besonderer Wasserspareffekt erreicht. Ein erneutes Befüllen des oder der äußeren Tanks zu Beginn eines Spülgangs ist dann nicht nötig.

Vorzugsweise ist der jeweilige innere Tank außen auf einer Wandung des Spülbehälters diesen thermisch kontaktierend angebracht. Auf seiner dieser Spülbehälterwandung abgewandten Außenwand ist diese thermisch kontaktierend ein äußerer Tank vorgesehen. Insbesondere ist somit ein innerer Tank und ein ihm außen zugeordneter äußerer Tank als eine Doppeltankanordnung außen an einer Wandung, insbesondere Seitenwandung, des Spülbehälters angebracht. Insbesondere ist es zweckmäßig, wenn der innere Tank und der diesem zugeordnete äußere Tank jeweils eine parallel zur Lageebene der Wandung des Spülbehälters, an der sie als Doppeltankanordnung angebracht sind, wesentlich größere Erstreckung als senkrecht zur Wandebene aufweisen. Dies gilt vor allem, wenn eine solche Doppeltankanordnung an einer ersten Seitenwandung und/oder an einer zweiten Seitenwandung des Spülbehälters angebracht ist, da dort seitlich zu benachbarten Küchenmöbeln jeweils nur ein schmaler Raumspalt durch die vorgegebenen, einzuhaltenden Geräteabmessungen wie z.B. von 60 cm Breite und 60 cm Tiefe zur Verfügung steht. Sind ein innerer Tank und ein äußerer Tank als Doppeltankanordnung vorzugsweise an einer Seitenwandung des Spülbehälters angebracht, so haben sie vom Standort eines Benutzers aus betrachtet, der vor der Haushaltsgeschirrspülmaschine steht, in Tiefenrichtung und Höhenrichtung vorzugsweise eine wesentlich größere Erstreckung als ihre jeweilige Erstreckung (Dicke) in Breitenrichtung bzw. Querrichtung. Vorzugsweise bedecken der jeweilige innere Tank und der ihm zugeordnete äußere Tank übereinander angeordnet eine möglichst große Fläche der Außenfläche der Wandung, insbesondere Seitenwandung, des Spülbehälters, an der sie angebracht sind. Sie sind vereinfacht ausgedrückt jeweils als dünne Hohlkörper in etwa scheibenförmig ausgebildet. Der innere Tank und der äußere Tank können jeweils vorzugsweise als flache, insbesondere quaderförmiger, Hohlkörper ausgebildet sein, die übereinander angeordnet sind und aneinandergrenzen, insbesondere einander kontaktieren. Insbesondere können sie weitgehend kongruent bzw. deckungsgleich zueinander angeordnet sein. Ggf. sind auch davon abgewandelte Geometrieformen für den jeweiligen inneren Tank und dem diesen zugeordneten Tank möglich.

Die Doppeltankanordnung kann besonders günstig dadurch gebildet sein, dass in einem gemeinsamen Gehäuse ein Hohlraum durch eine Trennwand derart in zwei Kammern unterteilt ist, dass diese den inneren Tank und den äußeren Tank bilden.

Auch wenn die Wärmepumpe während des Spülgangs eines durchzuführenden Geschirrspülprogramms zumindest zweimal ein- und ausschaltbar ist, kann günstig ab dem während des Spülgangs ersten Einschalten der Wärmepumpe sämtliche Flüssigkeit, die zu diesem Zeitpunkt im zumindest einen äußeren Tank enthalten ist, bis zum Ende des Spülgangs dort behalten werden, um auch bei mehrmaligem Ein- und Ausschalten der Wärmepumpe bereits vom ersten Einschalten der Wärmepumpe an keinen Wasserverlust mehr aus den äußeren Tanks zu haben. Sobald also erstmalig die Wärmepumpe während des Spülgangs eines durchzuzuführenden Geschirrspülprogramms in Betrieb genommen wird, verbleibt die zum Zeitpunkt der erstmaligen Inbetriebnahme der Wärmepumpe im jeweiligen äußeren Tank gespeicherte Flüssigkeit in diesem bis zum Ende des Spülgangs.

Insbesondere kann auch zumindest ein Teil der in den inneren Tanks und äußeren Tanks gehaltenen Flüssigkeit für den nächsten Spülgang in der Vorspülphase in den Spülbehälter eingeleitet werden und dort unterstützend zum Spülen wirken.

Wenn zu Beginn des Spülgangs alle Tanks mit Flüssigkeit befüllt sind, die im Wesentlichen Umgebungstemperatur (am Aufstellungsort der Haushaltsgeschirrspülmaschine) aufweist, ist zusätzlich dort eine höhere Temperatur als durch zugeführtes, vorzugsweise enthärtetes, Frischwasser (insbesondere ca. 15°C), das aus einem Wasserhahn der Hauswasserleitung kommt, gegeben; damit ist auch die Energiebilanz verbessert.

Vorteilhaft ist die im äußeren Tank wie auch im diesem äußeren Tank zugeordneten inneren Tank enthaltene Flüssigkeit zugeführtes Frischwasser nach Durchlauf durch einen Enthärter, so dass einer Verkalkung effektiv vorgebeugt ist.

Günstig wird der Betrieb der Wärmepumpe während einer gewünschten bzw. geforderten Aufheizphase innerhalb zumindest eines flüssigkeitsführenden Teilspülgangs, wie z.B. im Reinigungsgang und/oder Klarspülgang, des Spülgangs eines durchzuführenden Geschirrspülprogramms, bei welcher Spülflotte bzw. Spülflüssigkeit, mit der das Spülgut im Spülbehälter beaufschlagt wird, auf eine gewünschte Mindesttemperatur aufzuheizen ist, gestartet, um damit eine weitere Heizung zu entlasten oder sogar überflüssig zu machen.

Wenn die Tanks vorzugsweise außerhalb von einer oder mehreren seitlichen Wandungen des Spülbehälters an diesem oder diesen angeordnet sind, kann ein Befüllen oder Entleeren der ein oder mehreren inneren Tanks die Wärmeleitung zwischen dem Spülbehälter und den ein oder mehreren äußeren Tanks sehr effektiv beeinflussen. Zudem sind seitlich hohe und tiefe Räume vorhanden, die lediglich in der Breite auf wenige Zentimeter pro Seite beschränkt sind. Günstig für ein großes Tankvolumen sind daher sowohl einer von der Tür aus linken als auch einer rechten Seitenwand jeweils ein innerer und ein äußerer Tank zugeordnet.

Für einen guten Wärmeübergang kann der Verdampfer rohrförmig im jeweils äußeren Tank angeordnet sein und so einen direkten thermischen Kontakt zu darin gehaltener Flüssigkeit haben. Der jeweilige äußere und der diesem jeweilig zugeordnete innere Tank stehen in einem sehr innigen thermischen Kontakt zueinander. Sie können zweckmäßigerweise in einem gemeinsamen Gehäuse mit einer dünnen Zwischenwandung angeordnet sein.

Insbesondere sind die Abläufe zum Befüllen und Entleeren der Tanks in einem Steuerprogramm hinterlegt, um einen effektiven Ablauf zu gewährleisten und Fehlbedienungen zu vermeiden.

Energetisch sehr günstig ist nach einer vorteilhaften Weiterbildung die Wärmepumpe in zumindest zwei Phasen des Spülgangs eines durchzuführenden Geschirrspülprogramms jeweils zur zumindest Unterstützung einer Erwärmung aktiv., Vorzugsweise kann die erste Phase insbesondere eine Erwärmungs- bzw. Aufheizphase für Spülflüssigkeit im Spülbehälter als Teil eines Reinigungsgangs des Spülgangs sein. Die zweite Phase kann insbesondere eine Erwärmungs- bzw. Aufheizphase für Spülflüssigkeit im Spülbehälter als Teil eines Klarspülgangs oder eine Aufheizphase als Teil eines Trocknungsgangs des Spülgangs sein.

Vorzugsweise kann oder können der oder die innere(n) Tank(s) ein Fassungsvermögen von ca. einem Liter und der oder die äußere(n) Tank(s) ein Fassungsvermögen von ca. vier Litern aufweisen.

Wenn die Haushaltsgeschirrspülmaschine nach Anspruch 15 so betrieben wird, dass der zumindest eine äußere Tank im Spülgang mit Flüssigkeit befüllt wird oder ist und sämtliche Flüssigkeit, die zu Beginn des während des Spülgangs erstmaligen Betriebs der Wärmepumpe im zumindest einen äußeren Tank enthalten ist, bis zum Ende des Spülgangs dort behalten wird, ergibt sich die o. g. Minimierung des Wasserverbrauchs.

Der niedrige Verbrauch kann besonders unterstützt werden, wenn nach einer vorteilhaften Weiterbildung der Erfindung die Wärmepumpe während eines Spülgangs zumindest zweimal ein- und ausgeschaltet wird und ab dem ersten Einschalten der Wärmepumpe sämtliche Flüssigkeit, die zu diesem Zeitpunkt im zumindest einen äußeren Tank enthalten ist, bis zum Ende des Spülgangs dort behalten wird.

Dabei kann nach einer vorteilhaften Weiterbildung energetisch und für den Wasserbedarf optimiert die am Ende des Spülgangs in dem zumindest einen äußeren Tank des Verdampfers enthaltene Flüssigkeit zumindest teilweise in einem nächsten Spülgang als Teil der Spülflotte bzw. Spülflüssigkeit zu einem Vorspülen des Spülguts genutzt und in den Spülbehälter eingeleitet werden.

Zur Befüllung der Tanks wird nur minimal Wasser verbraucht, wenn gemäß einer vorteilhaften Weiterbildung nach Verbrauch von Flüssigkeit aus den Tanks zum Vorspülen der äußere Tank während dieses Spülgangs nur noch noch genau einmal mit Flüssigkeit befüllt wird und diese Flüssigkeit dann bis zum Ende des Spülgangs hält.

Besonders vorteilhaft ist die Wärmepumpe in zumindest zwei Phasen eines Spülgangs jeweils zur Unterstützung einer Erwärmung aktiv, insbesondere im Reinigungsgang und im zeitlich späteren Klarspülgang des Spülgangs des jeweilig durchzuführenden Geschirrspülprogramms.

Ein besonderer Wasserspareffekt ergibt sich zudem, wenn sämtliche aus dem inneren Tank abgeführte Flüssigkeit, insbesondere dort zwischengespeichertes enthärtetes Frischwasser, dem Spülbehälter zur dortigen weiteren Nutzung zugeführt wird. Auch diese Flüssigkeit wird dann nicht verschwendet und zu keinem Zeitpunkt einfach, d.h. ohne vorige Nutzung als Teil einer Spülflüssigkeitsmenge, die für mindestens einen flüssigkeitsführenden Teilspülgang eines Spülgangs im Spülbehälter zur Beaufschlagung des zu reinigenden Spülguts verwendet wird, aus der Haushaltsgeschirrspülmaschine abgepumpt.

Insbesondere ist es nach einer Weiterbildung der Erfindung energetisch vorteilhaft, wenn der jeweilige innere Tank während einer gewünschten Aufheizphase mindestens eines flüssigkeitsführenden Teilspülgangs, insbesondere des Reinigungsgangs und/oder Klarspülgangs, des jeweiligen Spülgangs, welche durch Aktivierung der Wärmepumpe unterstützt oder bewirkt wird, mit Luft befüllt ist. Dann ist zwischen dem jeweiligen, mit dem Verdampfer versehenen äußeren Tank und dem Spülbehälter eine thermische Isolierung gebildet und ein thermischer Kurzschluss zwischen dem Spülbehälter und dem jeweiligen, flüssigkeitsgefüllten äußeren Tank, dessen gespeicherte Flüssigkeit bei fortschreitendem Betrieb der Wärmepumpe durch den Entzug von Wärme durch den Verdampfer immer kälter wird, weitgehend vermieden. Die mittels des Verflüssigers der Wärmepumpe in den Spülbehälter eingebrachte Wärmemenge verbleibt dort während der durch die Wärmepumpe bewirkten oder unterstützten Aufheizphase weitgehend.

Ggf. kann es zweckmäßig sein, wenn nach der während eines flüssigkeitsführenden Teilspülgangs wie z.B. Reinigungsgangs des Spülgangs ersten Betriebsphase der Wärmepumpe der jeweilige innere Tank mit Flüssigkeit, insbesondere enthärtetem Frischwasser, - vorzugsweise lediglich - während einer nachfolgenden Teilphase, insbesondere Endphase, dieses flüssigkeitsführenden Teilspülgangs und/oder eines nachfolgenden flüssigkeitsführenden Teilspülgangs des Spülgangs befüllt wird oder ist, in welcher mittels der Wärmepumpe eine aktive Aufheizung von Spülflüssigkeit, Luft, und/oder Spülgut im Spülbehälter unterbleibt und ein Wärmetransfer vom Spülbehälter auf die im nächsten flüssigkeitsführenden Teilspülgang des Spülgangs zu entleerende Flüssigkeit des jeweiligen inneren Tanks zu deren Vorerwärmung, und/oder zum Auftauen von Eis oder zum Erwärmen von Eiswasser im jeweiligen äußeren Tank gewünscht ist. Dadurch steht auch für eine nachfolgende zweite Betriebsphase der Wärmepumpe wie z.B. in einem späteren flüssigkeitsführenden Teilspülgang wie z.B. dem Klarspülgang des Spülgangs ein ausreichendes Wärmeenergiereservoir für den Verdampfer der Wärmepumpe zur Verfügung, so dass mit deren Verflüssiger eine Aufheizung von Spülflüssigkeit, die zur Beaufschlagung von Spülgut im Spülbehälter für diesen späteren flüssigkeitsführenden Teilspülgang verwendet wird, auf eine geforderte Mindesttemperatur ermöglicht ist. Zudem wird die im jeweiligen inneren Tank zwischengespeicherte Flüssigkeit vorerwärmt, so dass diese insbesondere im nächsten flüssigkeitsführenden Teilspülgang wie z.B. Zwischenspülgang oder Klarspülgang des Spülgangs als Teilmenge einer gewünschten Spülflüssigkeitsmenge energetisch günstig verwendet werden kann. Dies kann den Spülgang insgesamt beschleunigen.

Energetisch vorteilhaft ist es insbesondere, wenn die Phase, in der der jeweilige innere Tank mit Flüssigkeit, insbesondere enthärtetem Frischwasser, befüllt wird oder ist, durchgeführt wird, bevor die im jeweiligen flüssigkeitsführenden Teilspülgang des Spülgangs im Spülbehälter zum Spülen verwendete Spülflüssigkeit aus dem Spülbehälter und/oder aus einem mit ihm verbundenen Hydrauliksystem entleert wird, insbesondere über eine Abwasserleitung, bevorzugt einen Abwasserschlauch, mittels einer Entleerungspumpe abgepumpt wird.

Gemäß einer vorteilhaften Weiterbildung kann es energetisch zweckmäßig sein, wenn der jeweilige innere Tank während der überwiegenden Zeitdauer des Trocknungsgangs des Spülgangs mit Flüssigkeit befüllt ist. Dadurch stellt die Flüssigkeit im jeweiligen inneren Tank eine thermisch leitende Verbindung zwischen der Wandung des Spülbehälters, an der der jeweilige innere Tank angebracht ist, und dem diesem zugeordneten äußeren Tank, der Teile des Verdampfers umfasst, her. Da sich nach dem ein oder vorzugsweise mehrmaligen Betrieb der Wärmepumpe während der ein oder mehreren flüssigkeitsführenden Teilspülgänge des jeweiligen Spülgangs die Temperatur der im jeweiligen äußeren Tank gespeicherten Flüssigkeit gegenüber der Umgebungstemperatur und insbesondere gegenüber der Einlauftemperatur dieser Flüssigkeit (bei Einlauf aus dem Wasserhahn der Hauswasserleitung) deutlich erniedrigt hat und sich ggf. Eiswasser und/oder Eis gebildet hat, sorgt dieses Kältereservoir im jeweiligen äußeren Tank während des Trocknungsgangs des Spülgangs für einen effizienten Wärmeentzug aus dem Spülbehälter und begünstigst die Kondensation von Feuchtigkeit aus der feucht- heißen und/oder wasserdampfhaltigen Luft im Spülbehälters an der Innenseite derjenigen Wandung(en), die jeweils außen mit mindestens einem inneren Tank und einem diesem zugeordneten äußeren Tank bestückt ist. Denn die Wandung, an der der jeweilige innere Tank und der jeweilige, diesem weiter außen zugeordnete äußere Tank angebracht sind, kann gegenüber dem Spülgut und der feuchten und/oder wasserdampfhaltigen Luft im Spülbehälter vorzugsweise bis zum Ende des Trocknungsgangs um eine Temperaturdifferenz kälter gehalten werden, die für eine einwandfreie Auskondensation von Feuchtigkeit aus der Luft im Spülbehälter ausreicht.

Verallgemeinert betrachtet kann es also zweckmäßig sein, wenn der jeweilige innere Tank während einer inaktiven Phase der Wärmepumpe zwischen einer ersten, mittels der Wärmepumpe durchgeführten Aufheizphase der Wärmepumpe und einer nachfolgenden, zweiten, mittels der Wärmepumpe durchgeführten Aufheizphase mit Flüssigkeit, insbesondere enthärtetem Frischwasser, zwischenzeitlich befüllt wird. Dadurch kann der jeweilige äußere Tank regeneriert, d.h. sein Inhalt thermisch wieder aufgeladen werden. Insbesondere kann dort Eis, das sich nach der ersten Aufheizphase aufgrund des Wärmeentzugs mittels des Verdampfers der Wärmepumpe etwaig gebildet hat, teilweise oder ganz aufgetaut werden.

Sonstige Weiterbildungen der Erfindung sind in den Unteransprüchen wiedergegeben.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Ausführungsbeispiele darstellenden Zeichnungen näher erläutert.

In der Zeichnung zeigt:
- Fig. 1: eine schematische perspektivische Ansicht von schräg vorne einer beispielhaften Ausführungsform einer nach dem erfindungsgemäßen Prinzip ausgebildeten Haushaltsgeschirrspülmaschine, mit einer hier vorderseitigen Tür und einem Spülbehälter im Inneren,
- Fig. 2: eine schematische Ansicht einer von der Geschirrspülmaschine umfassten Wärmepumpe,
- Fig. 3: eine beispielhafte Anordnung von inneren und äußeren Tanks links und rechts des Spülbehälters der Haushaltsgeschirrspülmaschine der Figuren 1, 2, wobei im jeweiligen äußeren Tank Teile des Verdampfers der Wärmepumpe der Figur 2 angeordnet sind, und
- Fig. 4: eine diagrammatische Darstellung eines beispielhaften Programmablaufs eines Spülgangs, wobei als x-Achse die Zeit und als y-Achse die Temperatur im Spülbehälter aufgetragen ist und einzelne Programmschritte mit ihrer Einsatzzeit hervorgehoben sind, und wobei zeitlich begleitend hierzu zusätzlich die jeweiligen Füllstände des jeweiligen inneren Tanks und des diesem zugeordneten äußeren Tanks, die dem Verdampfer zugeordnet sind, veranschaulicht sind.

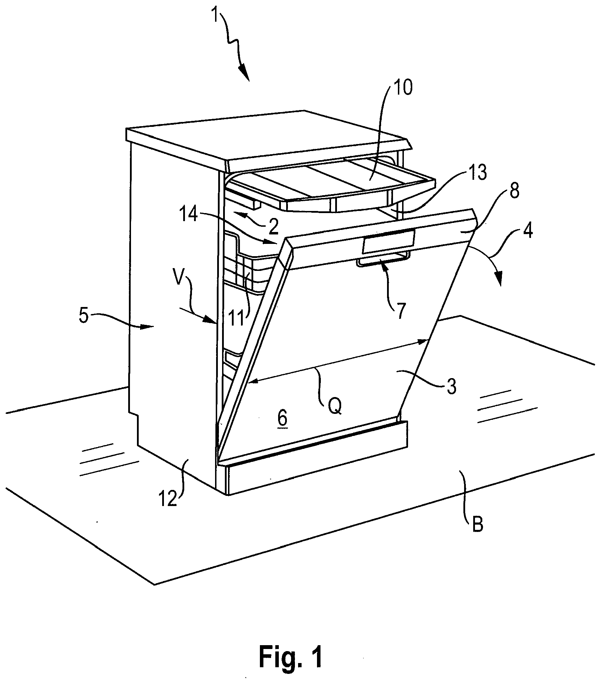

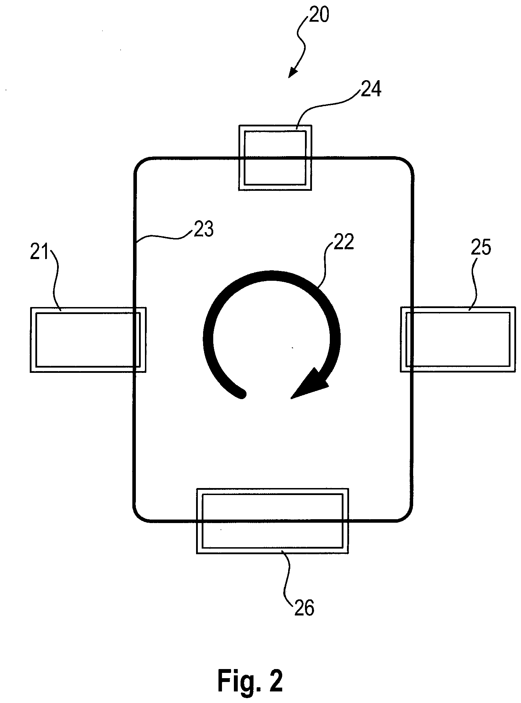

In den Figuren 1 - 4 sind einander entsprechende Teile mit denselben Bezugszeichen versehen. Dabei sind nur diejenigen Bestandteile eines Haushaltsgeräts mit Bezugszeichen versehen und erläutert, welche für das Verständnis der Erfindung erforderlich sind.

Das in Figur 1 schematisch dargestellte Haushaltsgerät ist hier eine Haushaltsgeschirrspülmaschine 1. Auch andere Haushaltsgeräte mit zumindest einer Wärmepumpe 20 kommen grundsätzlich für eine erfindungsgemäße Ausbildung in Betracht.

Die im folgenden beschriebene Haushaltsgeschirrspülmaschine nach Figur 1 weist als Bestandteil eines teilweise nach außen offenen oder geschlossenen Gerätekörpers 5 einen Spülbehälter 2 zur Aufnahme von zu bearbeitendem Spülgut wie Geschirr, Töpfen, Bestecken, Gläsern, Kochutensilien u. ä. auf. Das Spülgut kann dabei zum Beispiel in Geschirrkörben 11 und/oder einer Besteckschublade 10 lagerbar oder halterbar und dabei von sog. Spülflotte beaufschlagbar sein. Als Spülflotte bzw. Spülflüssigkeit wird dabei frisches oder insbesondere im Betrieb umlaufendes Wasser mit oder ohne Reinigungsmittel, und/oder Klarspülmittel, und/oder Trocknungsmittel verstanden. Insbesondere hat die Spülflotte einen lonentauscher zur Enthärtung durchlaufen. Die Spülflotte kann zusätzlich auch mehr oder weniger mit Verschmutzungen aus dem laufenden Betrieb versetzt sein. Der Spülbehälter 2 kann einen zumindest im Wesentlichen rechteckigen Grundriss mit einer in Betriebsstellung einem Benutzer zugewandten Vorderseite V aufweisen. Diese Vorderseite V kann dabei einen Teil einer Küchenfront aus nebeneinander stehenden Küchenmöbeln bilden oder bei einem allein stehenden Gerät auch ohne Bezug zu weiteren Möbeln sein.

Der Spülbehälter 2 ist insbesondere an dieser Vorderseite V von einer Tür oder Klappe 3 verschließbar. Diese Tür 3 ist in Figur 1 in teilweise geöffneter und dann schräg zur Vertikalen stehenden Stellung gezeigt. In ihrer Schließstellung steht sie hingegen aufrecht und ist gemäß der Zeichnung zu ihrer Öffnung um eine untere Horizontalachse nach vorne und unten in Richtung des Pfeils 4 aufschwenkbar, so dass sie in vollständig geöffneter Stellung zumindest nahezu horizontal liegt.

An ihrer in Schließstellung vertikalen, dem Benutzer zugewandten Außen- und Vorderseite V kann die Tür 3 mit einer Dekorplatte 6 versehen sein, um damit eine optische und/oder haptische Aufwertung und/oder eine Anpassung an umliegende Küchenmöbel zu erfahren.

Die Geschirrspülmaschine ist hier als allein stehendes oder als sog. teilintegriertes oder auch als voll integriertes Gerät ausgebildet. Im letztgenannten Fall kann der Gerätekörper 5 auch im Wesentlichen mit den Außenwandungen des Spülbehälters 2 abschließen. Ein diesen außen umgebendes Gehäuse kann dann teilweise oder ganz entbehrlich sein. Im unteren Bereich der Geschirrspülmaschine kann sich ein Sockel 12 zur Aufnahme von insbesondere Funktionselementen, wie etwa auch einer Umwälzpumpe und/oder Entleerungspumpe für die Spülflotte, befinden. Die Umwälzpumpe kann insbesondere auch beheizbar sein, um so die Spülflotte auf die im jeweiligen Programmschritt gewünschte Temperatur zu bringen. Eine externe, von der Umwälzpumpe unabhängige Heizung kann zusätzlich oder alternativ vorgesehen sein.

Der beweglichen Tür 3 ist im Ausführungsbeispiel gemäß der Zeichnung in ihrem oberen Bereich eine in Querrichtung Q der Geschirrspülmaschine erstreckte Bedienblende 8 zugeordnet, die eine von der Vorderseite V zugängliche Eingriffsöffnung 7 zum manuellen Öffnen und/oder Schließen der Tür 3 umfassen kann. In Querrichtung Q hat die Geschirrspülmaschine häufig eine Erstreckung von 45, 50 oder 60 Zentimetern. In Tiefenrichtung von der Vorderseite V nach hinten liegt die Erstreckung häufig ebenfalls bei etwa 60 Zentimetern. Die Werte sind nicht zwingend.

Der Spülbehälter 2 ist umlaufend von insgesamt bei geschlossener Tür oder Klappe 3 drei festen vertikalen Wandungen 13 (zwei Seitenwandungen und eine Rückwandung) sowie zwei horizontalen Wandungen 13 begrenzt, von denen eine eine Decke (oben) und eine weitere einen Boden (unten) des Spülbehälters 2 bildet. Die zur Vorderseite, zu einem vor der Geschirrspülmaschine 1 stehenden Benutzer hin angeordnete und hier bewegliche Wandung 14 bildet dabei einen inneren Bestandteil der beweglichen Tür oder Klappe 3 aus. An die Vorderseite V grenzen in Querrichtung Q nach links hin eine linke aufrechte Seitenwand 13 und nach rechts hin eine rechte aufrechte Seitenwand 13 an.

Die den Boden des Spülbehälters 2 bildende und diesen im Wesentlichen nach unten hin begrenzende Wandung 13 liegt ungefähr horizontal, also parallel zu einem äußeren Boden B, auf dem die Geschirrspülmaschine 1 steht.

Die Haushaltsgeschirrspülmaschine 1 ist weiter mit zumindest einer Wärmepumpe 20 versehen, deren Bestandteile an unterschiedlichen Stellen im Haushaltsgerät 1 - auch verteilt - angeordnet sein können.

Die Wärmepumpe 20 umfasst einen Kompressor (auch Verdichter genannt) 21, in dem am umlaufenden Wärmepumpenmedium 23 Arbeit geleistet wird, so dass dieses Medium 23 erhitzt wird.

In Fließrichtung 22 des Wärmepumpenmediums 23 folgt auf den Kompressor 21 ein Kondensator bzw. Verflüssiger 24, der direkt, oder indirekt wie z.B. über einen Wärmetauscher mit der Spülflüssigkeit und/oder Luft im Spülbehälter thermisch gekoppelt ist In diesem Verflüssiger kondensiert während des Betriebs der Wärmepumpe 20 das Medium 23 vom gasförmigen in den flüssigen Zustand und gibt durch diesen Phasenwechsel Wärme an die dort am Ort des Verflüssigers herrschende Umgebung ab, also insbesondere an die o. g. Spülflotte und/oder die Luft im Spülbehälter 2. Der Kondensator 24 wirkt damit auch als ein Wärmetauscher. Hierdurch entsteht eine Aufheizung der Spülflotte und/oder Luft im Spülbehälter 2, so dass eine zusätzliche elektrische Heizung kleiner ausgebildet sein und/oder kürzer laufen kann als ohne die Wärmepumpe 20. Je nach Ausbildung kann auch eine zusätzliche elektrische Heizung ganz verzichtbar sein. In jedem Fall ergibt sich hier beim gewünschten Aufheizen von Spülflotte, d.h. Spülflüssigkeit, und/oder Luft im Spülbehälter 2 eine große energetische Unterstützung durch die Wärmepumpe.

Auf den Kondensator bzw. Verflüssiger 24 folgt in Fließrichtung 22 eine Druckminderungs- bzw. Entspannungseinrichtung 25 wie z.B. ein Kapillarröhrchen, eine Drossel, ein Magnetventil oder dergleichen. An die Entspannungseinrichtung 25 schließt sich in Fließrichtung 22 ein Verdampfer 26 an, in dem das zuvor flüssige Medium 23 wieder gasförmig wird. Dabei wird der dortigen Umgebung (zum Beispiel der Küchenluft und/oder einem Latentwärmespeicher) Wärme entzogen, so dass in dieser Umgebung eine Abkühlung stattfindet. Auch der Verdampfer 26 bildet damit einen Wärmetauscher aus, jedoch mit einer anderen Umgebung als der Kondensator 24.

Ab dem Verdampfer 26 ist das Medium 23 wieder gasförmig und kann durch die mechanische Arbeit im dann nachfolgenden Verdichter 21 wieder erhitzt werden, so dass der beschriebene Kreislauf wieder gestartet wird.

Dem Verdampfer 26 sind zumindest zwei im Wesentlichen flache Tanks 27, 28 zugeordnet. Diese können direkt aneinander angrenzen und mit Blickrichtung auf die für sie vorgesehene Wand des Spülbehälters 2, an der sie jeweils als Doppeltankanordnung angebracht sind, jeweils eine parallel zur Lageebene dieser Wand (d.h. Wandebene) wesentlich größere Erstreckung als senkrecht zur Wandebene aufweisen. Vorzugsweise bedecken sie übereinander angeordnet eine möglichst große Fläche der Außenfläche der Wand des Spülbehälters, an der sie angebracht sind. Sind ein innerer Tank 27 und ein äußerer Tank 28 als Doppeltankanordnung vorzugsweise an einer Seitenwand des Spülbehälters angebracht, so haben sie vom Standort eines Benutzers aus betrachtet, der vor der Haushaltsgeschirrspülmaschine steht, in Tiefenrichtung und Höhenrichtung eine wesentlich größere Erstreckung als ihre jeweilige Erstreckung (Dicke) in Breitenrichtung bzw. Querrichtung. Sie sind vereinfacht ausgedrückt jeweils als dünner Hohlkörper in etwa scheibenförmig ausgebildet. Der innere Tank 27 und der äußere Tank können jeweils vorzugsweise als flache quaderförmige Hohlkörper ausgebildet sein, die übereinander angeordnet sind. Insbesondere können sie weitgehend kongruent bzw. deckungsgleich zueinander angeordnet sein. Die Doppeltankanordnung kann besonders günstig dadurch gebildet sein, dass in einem gemeinsamen Gehäuse ein Hohlraum durch eine Trennwand derart in zwei Kammern unterteilt ist, dass diese den inneren Tank und den äußeren Tank bilden.

Insbesondere ist oder sind der oder die äußeren Tanks 28 größer als der oder die inneren Tanks 27. Das Aufnahmevolumen bzw. Fassungsvolumen des jeweiligen äußeren Tanks ist also vorzugsweise größer als das Aufnahmevolumen des jeweiligen inneren Tanks.

Von den zumindest zwei Tanks 27, 28 ist ein innerer Tank 27 mit direktem thermischen Kontakt zum Spülbehälter 2 angeordnet; dieser innere Tank 27 liegt also beispielsweise vollflächig an einer Außenwandung 13 des Spülbehälters 2 an. Er kann mit dieser durch Befestigungsmittel wie z.B. Schrauben oder Nieten, oder ggf. mit dieser verklebt sein. Je nach Befüllung kann dieser innere Tank 27 entweder bei Befüllung mit Flüssigkeit als Wärmekoppler zum Spülbehälter 2 hin oder bei Befüllung mit Luft als thermischer Isolator zum Spülbehälter 2 hin verwendbar sein. Der innere Tank 27 kann zusätzlich zur Wärmekopplungsfunktion auch als Speicher für im Spülbehälter 2 zu verwendendes Wasser dienen. Der innere Tank 27 wird daher auch als "air cavity" bezeichnet, in dem die darin enthaltene Flüssigkeit als Energietransfermedium dient. Das daraus in den Spülbehälter 2 abgelassene Wasser bildet dort vorzugsweise Prozesswasser, d.h. eine Teilmenge einer gewünschten Spülflüssigkeitsmenge für einen flüssigkeitsführenden Teilspülgang des Spülgangs eines durchzuführenden Geschirrspülprogramms aus.

In zumindest einem dem jeweiligen inneren Tank 27 nach außen hin anschließenden äußeren Tank 28 sind hingegen Teile des Verdampfers 26 angeordnet. Beispielsweise liegen mäandrierende Rohre als Teil des Verdampfers 26 im äußeren Tank 28. Dieser äußere Tank dient somit als Wärmeenergiespeicher für die Wärmepumpe. Zusätzlich kann Wasser aus dem äußeren Tank 28 ebenfalls bei dessen Entleerung in den Spülbehälter 2 eingebracht werden und dort ebenfalls als Prozesswasser dienen. Der äußere Tank 28 wird auch als "water cavity" bezeichnet und kann als Wärmenergiespeicher für die Wärmepumpe 20 dienen.

Die Erfindung betrifft daher insbesondere das Verfahren zum Befüllen und Entleeren der Tanks 27, 28 in unterschiedlichen Momenten des Spülgangs.

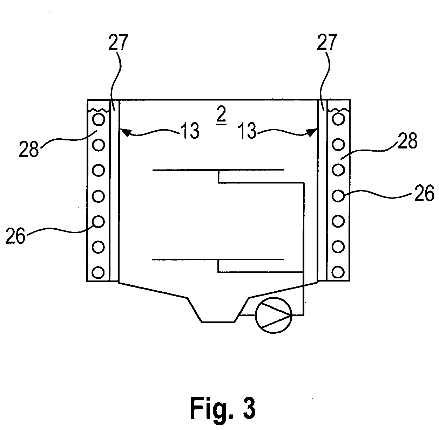

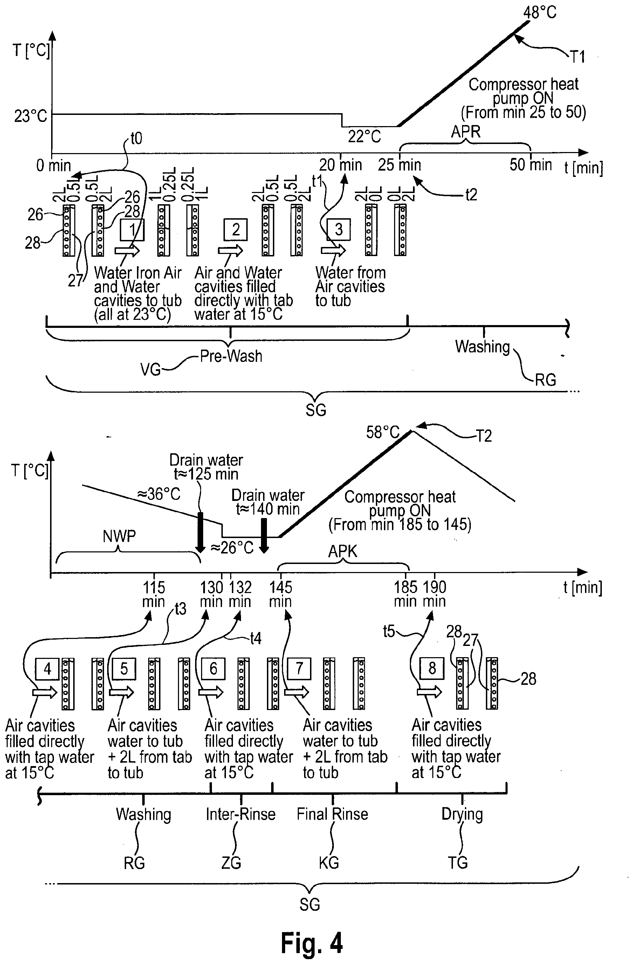

Gemäß den Figuren 3, 4 sind hier den Seitenwandungen 13 des Spülbehälters 2 , die links und rechts dessen Vorderseite V stehen, jeweils ein innerer, dem Spülbehälter 2 zugewandter Tank 27 und ein äußerer Tank 28 als Doppeltankanordnung zugeordnet. Diese Tanks 27, 28 stehen außerhalb des Spülbehälters 2. Die inneren Tanks 27 stehen in gutem thermischem Kontakt zum Spülbehälter 2. Die äußeren Tanks 28 sind vollflächig über die inneren Tanks 27 vom Spülbehälter 2 beabstandet und stehen in Querrichtung Q weiter außen. In dieser Ausbildung sind daher sowohl einer von der Tür 3 aus linken als auch einer rechten Seitenwandung 13 jeweils ein innerer Tank 27 und ein äußerer Tank 28 als Doppeltank zugeordnet, was nicht zwingend ist. Durch diese Doppeltankanordnungen an beiden Seitenwandungen des Spülbehälters ergibt sich jedoch ein vergleichsweise großes Gesamtvolumen der beiden äußeren Tanks, die jeweils mit Teilen des Verdampfers bestückt sind, und damit Wärmeenergiereservoir, aus dem der Verdampfer 26 Wärmeenergie beim Betrieb der Wärmepumpe 20 abziehen bzw. entnehmen kann.

Die Wärmepumpe 20 wird, wie unten noch näher beschrieben ist, über mindestens einen Teil der Zeitdauer des Spülgangs des jeweilig durchzuführenden Geschirrspülprogramms eingeschaltet. Dabei behält oder behalten der oder die äußeren Tanks 28 in diesem Spülgang sämtliche Flüssigkeit, die zu Beginn der beim Spülgang erstmaligen Inbetriebnahme der Wärmepumpe in diesem bzw. in ihnen enthalten ist, bis zum Ende des Spülgangs dort. Die nach dem erstmaligen Einschalten der Wärmepumpe 20 im äußeren Tank 28 enthaltene Flüssigkeit wird also während des Spülgangs eines durchzuführenden Geschirrspülprogramms weder ohne Nutzung abgeleitet noch dem Spülbehälter 2 als weitere Spülflotte zugeleitet. Dadurch ergibt sich ein besonders effektiver und sparsamer Umgang mit dieser Flüssigkeit, die insbesondere durch einen lonentauscher geleitetes und damit enthärtetes Wasser bilden kann.

Insbesondere kann die Wärmepumpe 20 während des Spülgangs eines durchzuführenden Geschirrspülprogramms zumindest zweimal ein- und ausschaltbar sein, zum Beispiel für das Aufheizen der Spülflotte während einer vorgegebenen ersten Aufheizphase in einer ersten Waschphase, insbesondere dem Reinigungsschritt des Reinigungsgangs, und für das Aufheizen der Spülflotte während einer vorgegebenen zweiten Aufheizphase einer zweiten Waschphase, insbesondere dem Klarspülschritt des Klarspülgangs, des durchzuführenden Geschirrspülprogramms. Ggf. kann die zweite Phase, in der die Wärmepumpe läuft, auch eine Erhitzungsphase während der Trocknungsphase des Trocknungsgangs des Geschirrspülprogramms sein, in welcher die im Spülbehälter vorhandene Luft mittels des Verflüssigers auf eine gewünschte Temperatur aufgeheizt werden soll. Ab dem ersten bzw. erstmaligen Einschalten der Wärmepumpe wird sämtliche Flüssigkeit, die zu diesem Zeitpunkt in dem zumindest einen äußeren Tank 28 enthalten ist, bis zum Ende des Spülgangs dort behalten.

Im Einzelnen ist ein typischer Programmzyklus eines Spülgangs SG eines durchzuführenden Geschirrspülprogramms der Haushaltsgeschirrspülmaschine 1 in Figur 4 dargestellt: Dieser Zyklus des Spülgangs SG umfasst beispielhaft fünf aufeinanderfolgende Phasen: Vorspülen ("Pre-Wash") im Vorspülgang VG, Waschen ("Washing") im Reinigungsgang RG, Zwischenspülen ("Inter- Rinse") im Zwischenspülgang ZG, nachfolgendes Klarspülen ("Final- Rinse") im Klarspülgang KG, und schließlich Trocknen ("Drying") im Trocknungsgang TG. In der oberen Bildhälfte von Figur 4 sind der Vorspülgang VG und die Aufheizphase APR des nachfolgenden Reinigungsgangs RG des Spülgangs SG dargestellt. Daran schließen sich in der unteren Bildhälfte von Figur 4 die Nachwaschphase NWP (ohne aktives Aufheizen der Spülflüssigkeit im Spülbehälter) des Reinigungsgangs RG, der Zwischenspülgang ZG, der Klarspülgang KG mit einer zweiten, d.h. weiteren Aufheizphase APK, und der Trocknungsgang TG an. Zusätzlich sind dazu passend die verschiedenen Füllstände des inneren Tanks und des diesem zugeordneten äußeren Tanks einer ersten Doppeltankanordnung auf der linken Seitenwandung des Spülbehälters und einer zweiten Doppelanordnung auf der rechten Seitenwandung des Spülbehälters eingezeichnet. Durch Folgepfeile mit zugeordneten Kästchennummerierungen 1 - 8 sind verschiedene Entleerungs- und Füllschritte des jeweiligen inneren und äußeren Tanks und damit für diese ein vorteilhaftes Füllstands- Management veranschaulicht.

Zur Erläuterung der Zusammenhänge zwischen den Füllständen der Tanks 27, 28 und der Ablaufschritte während des Spülgangs SG wird beispielhaft angenommen, dass der oder die innere(n) Tank(s) 27 insgesamt, d.h. zusammen, ein Fassungsvermögen von ca. einem Liter und der oder die äußere(n) Tank(s) 28 ein Fassungsvermögen von insgesamt ca. vier Litern aufweisen. Hier im Ausführungsbeispiel der Figur 4 fasst also der jeweilige innere Tank 27 ca. 0,5 I Flüssigkeit; der jeweilige äußere Tank 28 fasst ca. 2,0 I Flüssigkeit. Selbstverständlich sind auch andere Dimensionierungen der Tanks und damit andere Fassungsvermögen der Tanks möglich. Zweckmäßigerweise ist das Gesamtfassungsvolumen der ein oder mehreren äußeren Tanks derart gewählt, dass sich durch den Verdampfer aus der Gesamtflüssigkeitsmenge, die in dem oder den äußeren Tanks gespeichert ist, mindestens eine solche Wärmemenge abziehen lässt, dass diese ausreicht, die Spülflüssigkeit, die einem spülflüssigkeitsführenden Teilspülgang auf das Spülgut aufzubringen ist oder aufgebracht wird, auf eine gewünschte Mindesttemperatur mittels des Verflüssigers der Wärmepumpe aufzuheizen, oder die Spülflüssigkeiten, die in mehreren, wie z.B. zwei, spülflüssigkeitsführenden Teilspülgängen jeweils auf das Spülgut aufzubringen sind oder aufgebracht werden, jeweils auf eine bestimmte, gewünschte Temperatur mittels des Verflüssigers der Wärmepumpe aufzuheizen.

Eine besonders hohe Einsparung von Flüssigkeit ergibt sich dann, wenn die am Ende des Spülgangs in dem zumindest einen inneren Tank 27 und diesem zugeordneten äußeren Tank 28 jeweils enthaltene Flüssigkeit zumindest teilweise in einem nächsten Spülgang als Teil der Spülflotte oder als Spülflotte zu einem Vorspülen des Spülguts nutzbar und in den Spülbehälter 2 einleitbar ist. Dies kann beispielsweise dadurch erfolgen, dass in der Vorspülphase des Vorspülgangs VG die äußeren und inneren Tank(s) 27, 28 einmal teilentleert, insbesondere wie hier im Ausführungsbeispiel von Figur 4 bis etwa zur Hälfte geleert, oder ggf. auch ganz entleert werden, und diese Entleerungsmenge als Unterstützung der für das Vorspülen benötigten Spülflottenmenge oder ggf. als für das Vorspülen komplett benötigte Spülflottenmenge in den Spülbehälter 2 eingeleitet wird. Dieser Schritt der Teilentleerung oder ggf. Vollentleerung der Tanks 27, 28 ist in der Figur 4 nach dem Schrittpfeil mit der Kästchenziffer 1 verdeutlicht. Hier im Ausführungsbeispiel entspricht die Entleerungsmenge aus den beiden äußeren und beiden inneren Tanks akkumuliert etwa 2,5 l - 2,6 l (Liter).

Bei der oben genannten Ausbildung, dass die im äußeren Tank 28 wie auch im inneren Tank 27 enthaltene Flüssigkeit zugeführtes Frischwasser nach Durchlauf durch einen Enthärter ist, wird das Wassersparpotential dieser Anordnung deutlich.

Das enthärtete Wasser ist seiner Art nach gleich im inneren und äußeren Tank 27, 28, hat also auch die gleichen physikalischen Eigenschaften.

Die Steuerung ist so eingerichtet, dass zu Beginn des Spülgangs SG alle Tanks 27, 28 mit Flüssigkeit befüllt sind (siehe Figur 4), die im Wesentlichen die Umgebungstemperatur (beispielsweise die Raumtemperatur einer Küche, also über 20°C, typisch ca. 23°C) aufweist. Wie beschrieben, kann dabei zumindest die Befüllung der äußeren Tanks 28 noch aus dem vorigen, d.h. zeitlich früheren Spülgang stammen. Wenn dann beim Vorspülen nicht nur frisches Wasser aus dem Wasserhahn mit ca. 15°C in den Spülbehälter 2 zugegeben wird, sondern auch (gegenüber dem frischen Wasser aus dem Wasserhahn) wärmeres Wasser aus den Tanks 27, 28, stellt sich für die Spülflüssigkeit im Spülbehälter eine Mischtemperatur ein, die oberhalb der Frischwassertemperatur liegt. Das Reinigungsergebnis des Vorspülens ist dann verbessert, ohne dass hierzu zusätzliche Energie benötigt wurde.

Ggf. kann es auch günstig sein, wenn die Gesamtentleerungsmenge an Speicherwasser, das während des Vorspülgangs VG aus den inneren und äußeren Tanks 27, 28 insgesamt entnommen wird, in etwa der für das Vorspülen benötigten Spülbadmenge entspricht. Dies ist z.B. hier im Ausführungsbeispiel von Figur 4 der Fall, so dass das in den Spülbehälter aus den inneren und äußeren Tanks eingefüllte Speicherwasser etwa Raumtemperatur von ca. 23°C hat, weil es zur Erreichung der beim Vorspülgang VG benötigten Spülbadmenge nicht erforderlich ist, zusätzliches Frischwasser mit etwa 15 ° C Einlauftemperatur in den Spülbehälter einzulassen, was zu einer gegenüber der Raumtemperatur von 23°C niedrigeren Mischtemperatur im Spülbehälter führen würde.

Nach diesem genannten Verbrauch von Flüssigkeit aus den inneren und äußeren Tanks 27, 28 zum Vorspülen des Spülguts beim Vorspülgang VG wird der zumindest eine äußere Tank 28 während dieses Spülgangs SG nur noch genau einmal mit Flüssigkeit, insbesondere enthärtetem Frischwasser, befüllt, insbesondere bis zu seinem maximal vorgesehenen Füllstandspegel voll befüllt. Dann hält er diese Flüssigkeit optimalerweise bis zum Ende des Spülgangs SG. Zweckmäßigerweise wird diese Nachbefüllung des jeweiligen äußeren Tanks 28 noch vor dem Ende des Vorspülgangs VG durchgeführt. Hier im Ausführungsbeispiel von Figur 4 sind im ersten äußeren Tank dann wieder etwa 2 I enthärtetes Frischwasser und im zweiten äußeren Tank wieder etwa 2 I enthärtetes Frischwasser gespeichert.

Zusätzlich kann es zweckmäßig sein, wenn auch der jeweilige innere Tank 27 noch vor dem Ende des Vorspülgangs VG mit enthärtetem Frischwasser nachbefüllt wird. Dieser Schritt des Wiederauffüllens der zuvor teilentleerten Tanks 27, 28 ist in der Figur 4 nach dem Schrittpfeil mit der Kästchenziffer 2 verdeutlicht.

Eine Teilentleerung der äußeren Tanks 28 und der inneren Tanks 27 kann für das Vorspülen energetisch besonders zweckmäßig sein, weil sich beim Auffüllen von enthärtetem Frischwasser mit einer Einlauftemperatur von etwa 15° C im jeweiligen Tank 27, 28 eine gegenüber der Einlauftemperatur höhere Mischtemperatur einstellt. Für den Verdampfer 26 steht somit bei der erstmaligen Inbetriebnahme der Wärmepumpe während des nachfolgenden Reinigungsgangs RG eine höhere Wärmeenergiemenge im jeweiligen äußeren Tank 28 als bei einer kompletten Neubefüllung des jeweiligen äußeren Tanks mit Frischwasser von etwa 15°C aus dem Wasserhahn (insbesondere nach Enthärtung) zur Verfügung. Aus dem jeweiligen inneren Tank 27 lässt sich für den nachfolgenden Reinigungsgang eine Teilmenge an Speicherwasser entnehmen, das eine höhere Temperatur hat als wie wenn der jeweilige innere Tank 27 komplett mit Frischwasser von etwa 15°C aus dem Wasserhahn befüllt worden wäre.

Wie in Figur 4 deutlich wird, startet der erstmalige Betrieb der Wärmepumpe 20 erst nach dem Vorspülen des Vorspülgangs VG, nämlich beispielsweise während einer ersten Aufheizphase APR innerhalb des nachfolgenden Reinigungsgangs ("Washing") RG des Spülgangs. Dies ist hier im Ausführungsbeispiel von Figur 4 etwa bei der Zeitmarkierung t2 = 25 min (ab dem Spülgangstart bei 0 min gerechnet). Zuvor wird noch vor dem Ende des Vorspülgangs VG, hier im Ausführungsbeispiel bei der Zeitmarke t1 wie z.B. bei etwa 20 min nach dem Spülgangstart bei t0= 0 min, spätestens aber vor dem Start der Aufheizphase APR, in der die Wärmepumpe in Betrieb ist, die Flüssigkeit aus dem jeweiligen inneren Tank 27 vollständig in den Spülbehälter 2 entleert, so dass der jeweilige innere Tank 27 mit Luft gefüllt ist. Dadurch ist der jeweilige äußere Tank 28 von der Wandung 13 des Spülbehälters 2 während der ersten Aufheizphase APR thermisch isoliert. Dieser Schritt des vollständigen Entleerens des jeweiligen inneren Tanks 27 ist in der Figur 4 nach dem Schrittpfeil mit der Kästchenziffer 3 verdeutlicht.

Wenn die akkumulierte Entleerungsmenge aus den Tanks aus dem Vorspülgang noch nicht für eine geforderte Spülbadmenge für den Reinigungsgang RG ausreicht, kann bei Bedarf zusätzlich enthärtetes Frischwasser in den Spülbehälter über eine Zuleitung (nicht eingezeichnet) eingefüllt werden.

Die Wärmepumpe 20 kann in zumindest zwei Phasen des Spülgangs eines durchzuführenden Geschirrspülprogramms zur Unterstützung oder Bewirkung einer Erwärmung aktiv sein: Am Beginn der Waschphase des Reinigungsgangs ("Washing") wie z.B. RG ist während der ersten Aufheizphase wie z.B. APR eine aktive Erhitzung der Spülflüssigkeit im Spülbehälter, mit der das Spülgut zu beaufschlagen ist oder beaufschlagt wird, auf eine Temperatur wie z.B. T1, und während des Klarspülgangs ("Final Rinse") wie z.B. KG ist während einer zweiten Aufheizphase wie z.B. APK vorzugsweise von dessen Beginn weg bis zu dessen Ende eine weitere Erhitzung der Spülflüssigkeit, mit der das Spülgut im Spülbehälter zu beaufschlagen ist oder beaufschlagt wird, auf eine vorzugsweise noch höhere Temperatur wie z.B. T2 gefordert. Auf diese Weise weisen am Beginn der Trocknungsphase ("Drying") des Trocknungsgangs wie z.B. TG das Spülgut und die Prozessluft im Innenraum des Spülbehälters diese Endtemperatur wie z.B. T2 aus dem unmittelbar vorausgehenden Klarspülgang wie z.B. KG auf.. Diese jeweilige Erhitzung kann jeweils mit Unterstützung der Wärmepumpe 20 oder ausschließlich durch diese stattfinden.

Die erste Phase zur Unterstützung oder Bewirkung einer Erwärmung durch die Wärmepumpe 20 ist damit zumindest ein Teilabschnitt eines ersten flüssigkeitsführenden Teilspülgangs mit aufzuheizender Spülflüssigkeit im Spülbehälter, insbesondere eine anfängliche Aufheizzeitdauer bzw. Aufheizphase APR des Reinigungsgangs RG eines Spülgangs, der Haushaltsgeschirrspülmaschine 1, und zwar die Erwärmung auf die hohe Temperatur T1. Diese liegt gemäß Figur 4 beispielhaft bei 48°C. Die zweite Phase zur Unterstützung oder Bewirkung einer Erwärmung durch die Wärmepumpe 20 ist ein Teilabschnitt oder der Gesamtabschnitt eines zweiten flüssigkeitsführenden Teilspülgangs mit aufzuheizender Spülflüssigkeit im Spülbehälter, insbesondere die Aufheizphase APK des Klarspülgangs KG, und zwar die Erwärmung auf die Temperatur T2. Diese liegt gemäß Figur 4 beispielhaft bei 58°C. Zwischen diesen beiden Aufheizphasen APR und APK bzw. korrespondierend hierzu Betriebsphasen der Wärmepumpe 20 kann eine Pausenzeit oder Stillstandszeit der Wärmepumpe 20 liegen, in der diese nicht in Betrieb ist, oder nur mit reduzierter Leistung (gegenüber ihrem Aufheizbetrieb) läuft. Diese Stillstandszeit der Wärmepumpe zwischen den beiden Aufheizphasen APR, APK kann typisch einige zehn Minuten wie hier im Ausführungsbeispiel von Figur 4 z.B. 95 min betragen.

Ein Spülgang läuft hinsichtlich der Temperatur T im Spülbehälter gemäß Figur 4 über die Zeit t so ab, dass zunächst bei der Zeitmarke t0 bei 0 min die Tanks 27, 28 vollständig mit enthärtetem Frischwasser befüllt sind, das in etwa Umgebungstemperatur (z.B. 23 °C) aufweist. Diese Flüssigkeit aus den Tanks 27, 28 wird ganz oder teilweise in den Spülbehälter 2 geleitet, um dort das Vorspülen zu unterstützen oder durchzuführen. Anschließend werden die Tanks 27, 28 noch während des Vorspülens vollständig wieder mit enthärtetem Frischwasser aus einer Zuleitung (nicht dargestellt) befüllt. Bis zum Ende des Vorspülens ab der Zeitmarke t1 werden die inneren Tanks 27 in den Spülbehälter 2 als Prozesswasser entleert. Zusätzlich wird Wasser aus einer Zuleitung - ggf. enthärtet - direkt in den Spülbehälter 2 geleitet, wenn mehr Wasser benötigt wird. Sobald die inneren Tanks 27 geleert sind, wirken sie als thermische Isolatoren zwischen dem Spülbehälter 2 und den äußeren Tanks 28, weil die inneren Tanks 27 dann mit Luft befüllt sind. Dadurch kann die Wärmepumpe 20 während der Aufheizphase APR des Reinigungsgangs RG mit einer gesteigerten Effektivität arbeiten.

Ab der Zeitmarke t2 findet die Aufheizphase APR der Reinigungsphase ("washing") des Reinigungsgangs RG mit einer Erwärmung auf die Temperatur T1 statt. Diese Aufwärmphase APR findet mit Hilfe der Wärmepumpe 20 statt. Mit Erreichen der Zieltemperatur T1 wird die Wärmepumpe 20 ausgeschaltet oder bezüglich ihrer Leistung reduziert. Es folgt eine Nachwaschphase NWP, in der die zuvor auf T1 aufgeheizte Spülflüssigkeit weiter auf das Spülgut im Spülbehälter aufgebracht wird.

Ungefähr 15 Minuten bevor die Waschphase des Reinigungsgangs RG endet und die im Spülbehälter benutzte Spülflüssigkeit aus dem Spülbehälter entfernt, insbesondere mittels einer Entleerungspumpe abgepumpt, wird, werden in der Nachwaschphase NWP, in der keine aktive Aufheizung der im Spülbehälter vorhandenen Spülflüssigkeit mittels des Verflüssigers der Wärmepumpe mehr stattfindet, die inneren Tanks 27 wieder mit frischem Wasser aus der Zuleitung befüllt. Dies begünstigt den Wärmetransfer vom Spülbehälter 2 zu den äußeren Tanks 28. Diese werden dadurch wärmer als dies mit einer thermischen Abschirmung der Fall wäre. Einer Eisbildung in den äußeren Tanks 28 wird damit entgegengewirkt. Dieser Schritt des vollständigen Wiederauffüllens des jeweiligen inneren Tanks 27 ist in der Figur 4 nach dem Schrittpfeil mit der Kästchenziffer 4 verdeutlicht und findet bei t= 115 min statt.

Bei der Zeitmarke t3= 130 min beginnt die Zwischenspülphase des Zwischenspülgangs ZG. Hierfür werden die über eine gewisse Zeit bereits vom Spülbehälter 2 vorerwärmten inneren Tanks 27 wieder in den Spülbehälter 2 entleert. Dadurch wird im Spülbehälter 2 die Temperatur gegenüber unmittelbar einlaufendem Frischwasser erhöht - der Temperaturabfall ist geringer - und beträgt hier dann ca. 26 °C. Der Wärmeinhalt des inneren Tanks 27 wird damit noch genutzt und geht nicht verloren, wie dies bei einem Abpumpen des Tankinhalts über einen Abwasserschlauch aus der Haushaltsgeschirrspülmaschine insbesondere z.B. in ein hausseitiges Abwasserrohr der Fall wäre. Zudem wird zweckmäßigerweise Frischwasser aus einem Wasserhahn ggf. nach Durchlauf durch eine Enthärtungsanlage mittels einer Zuleitung in den Spülbehälter eingespeist, um die für den Zwischenspülgang benötigte Spülbadmenge im Spülbehälter insgesamt zu erreichen. Dieser Schritt des vollständigen Entleerens des jeweiligen inneren Tanks 27 ist in der Figur 4 nach dem Schrittpfeil mit der Kästchenziffer 5 verdeutlicht.

Bei der Zeitmarke t4 werden die inneren Tanks 27 im Zwischenspülgang ("Inter- Rinse") ZG wieder mit enthärtetem Frischwasser befüllt, bevor die im Spülbehälter benutzte Spülflüssigkeit aus dem Spülbehälter entfernt, insbesondere mittels einer Entleerungspumpe abgepumpt, wird. Damit wird ein Teil der Wärme aus dem Spülbehälter 2 in die äußeren Tanks 28 geleitet und zudem die inneren Tanks 27 erwärmt. Dieser Schritt des vollständigen Wiederauffüllens des jeweiligen inneren Tanks 27 ist in der Figur 4 nach dem Schrittpfeil mit der Kästchenziffer 6 verdeutlicht und findet bei t= 132 min statt. Am Ende des Zwischenspülgangs ZG, wie hier bei z.B. vorzugsweise t=140min, wird die Spülflüssigkeit, die im Spülbehälter für das Zwischenspülen verwendet worden ist, aus dem Spülbehälter entfernt, insbesondere mittels Entleerungspumpe teilweise oder ganz abgepumpt.

Bevor die nachfolgende Klarspülphase ("Final Rinse") KG bei vorzugsweise z.B. t= 145 min beginnt, während der in der zweiten Aufheizphase APK die Spülflüssigkeit im Spülbehälter auf T2 aufgeheizt wird, werden die inneren (dann erwärmten) Tanks 27 wieder in den Spülbehälter 2 geleert und dort als Teilmenge der benötigten Spülflüssigkeit für den Klarspülgang verwendet. Dieser Schritt des vollständigen Entleerens des jeweiligen inneren Tanks 27 ist in der Figur 4 nach dem Schrittpfeil mit der Kästchenziffer 7 verdeutlicht. Durch die Entleerung des jeweiligen inneren Tanks 27 während der Aufheizphase APK mittels der eingeschalteten Wärmepumpe 20 ist dann wieder eine thermische Isolierung vom Spülbehälter 2 erreicht, so dass die Wärmepumpe 20 (Compressor Heat pump) effektiver arbeiten kann.

Es beginnt dann die zweite Aufwärmphase APK auf die hohe Temperatur T2, hier zum Beispiel 58°C, mit Hilfe der Wärmepumpe 20.

Nach dem Klarspülen werden bei t5 die inneren Tanks 27 wieder befüllt, wobei diese Befüllung dann, wie oben beschrieben, bis zum nächsten Spülgang verbleiben kann, um Energie- und Wasserbedarf zu minimieren. Mit dieser Befüllung wird die Trocknung zudem verbessert, die anliegenden Seitenwände 13 bilden Kondensationsflächen und wärmen gleichzeitig die äußeren Tanks 28 auf. Dieser Schritt des vollständigen Wiederauffüllens des jeweiligen inneren Tanks 27 ist in der Figur 4 nach dem Schrittpfeil mit der Kästchenziffer 8 verdeutlicht und findet bei t= 190 min statt.

Ein besonderer Wasserspareffekt ergibt sich zudem, wenn sämtliches aus dem inneren Tank abgeführtes Wasser in weiterer Nutzung dem Spülbehälter 2 als Prozesswasser zur Durchführung des jeweiligen als Nächster anstehenden Teilspülgangs zugeführt wird. Auch dieses Wasser wird dann nicht verschwendet und zu keinem Zeitpunkt einfach abgepumpt.

Sämtliche Abläufe zu Befüllen und Entleeren der Tanks 27, 28 können zweckmäßigerweise in einem Steuerprogramm mindestens einer Steuer- und/oder Kontrolleinheit hinterlegt sein, um dadurch eine optimierte Anpassung an den Betrieb der Wärmepumpe zu gewährleisten und Fehlbedienungen auszuschließen.

Insgesamt ist daher der Energiebedarf für die Aufheizung der Spülflotte und der Wasserbedarf für den Betrieb der Haushaltsgeschirrspülmaschine erheblich verringert. Der Grad der Unterstützung durch die Wärmepumpe 20 kann je nach Ausbildung variieren, entsprechend kann eine elektrische Zusatzheizung kleiner dimensioniert werden oder im Idealfall auch ganz entfallen.

Zusammenfassend betrachtet und vorzugsweise auch losgelöst von den vorstehenden Ausführungsbeispielen ist insbesondere folgende allgemeine Konzeption für die Durchführung des Spülgangs eines durchzuführenden Geschirrspülprogramms einer mit einer Wärmepumpe ausgestatteten Haushaltsgeschirrspülmaschine zweckmäßig:
Der jeweilige innere Tank ist während des Spülgangs eines durchzuführenden Geschirrspülprogramms zweckmäßiger dann leer, d.h. mit Luft gefüllt, wenn im Spülbehälter Spülflüssigkeit für die oder während der Durchführung eines flüssigkeitsführenden Teilspülgangs des jeweiligen Spülgangs während einer ersten Aufheizphase unter Zuhilfenahme des Verflüssigers der Wärmepumpe aktiv erwärmt wird, bzw. noch allgemeiner ausgedrückt eine erste aktive Aufheizphase für die Erwärmung des Innenraums des Spülbehälters unter Unterstützung oder mittels alleinigem Betrieb der Wärmepumpe stattfindet. Dadurch ist während dieser ersten aktiven Aufheizphase der Spülbehälter vom jeweiligen äußeren Tank, der mit enthärtetem Frischwasser gefüllt ist und in dem der Verdampfer angeordnet ist, thermisch isoliert. Ein thermischer Kurzschluss vom Spülbehälter zum jeweiligen äußeren Tank ist somit während der ersten Aufheizphase im jeweiligen, insbesondere flüssigkeitsführenden, Teilspülgang des Spülgangs eines durchzuführenden Geschirrspülprogramms weitgehend vermieden. Der jeweilige innere Tank wird zweckmäßigerweise nur dann mit Flüssigkeit, insbesondere enthärtetem Frischwasser, gefüllt, wenn die erste aktive Aufheizphase durch die Wärmepumpe beendet bzw. vorbei ist, insbesondere die Wärmepumpe aus ist oder in ihrer Leistung gegenüber ihrer Leistung in der jeweiligen Aufheizphase reduziert läuft, jedoch in einer nachfolgenden, zweiten Aufheizphase die Wärmepumpe nochmals Spülflüssigkeit im Spülbehälter desselben oder eines weiteren, nachfolgenden flüssigkeitsführenden Teilspülgangs des durchzuführenden Spülgangs, aktiv erwärmen soll, bzw. allgemeiner ausgedrückt den Innenraum des Spülbehälters ein zweites Mal aktiv erwärmen soll. Dann kann mittels des jeweiligen flüssigkeitsbefüllten inneren Tanks Wärmeenergie vom Spülbehälter auf den äußeren Tank übertragen und dort während der jeweiligen Aufheizphase etwaig gebildetes Eis aufgetaut und/oder Eiswasser erwärmt werden. Vorzugsweise findet die Befüllung des jeweiligen inneren Tanks nach dem Ende der jeweiligen aktiven Aufheizphase, insbesondere nach der ersten Aufheizphase, eines flüssigkeitsführenden Teilspülgangs - wie z.B. des Reinigungsgangs während dessen Nachwaschphase -, und/oder während eines Teilabschnitts eines flüssigkeitsführenden Teilspülgangs (wie z.B. Zwischenspülgangs) ohne aktiv aufzuheizender Spülflüssigkeit, die im Spülbehälter zur Beaufschlagung von zu reinigendem Spülgut dient, statt, bevor die im Spülbehälter und/oder im mit diesem verbundene Wasserumlaufsystem bzw. Hydrauliksystem erwärmte Flüssigkeit aus dem Spülbehälter teilweise oder ganz über die Abwasserleitung, insbesondere den Abwasserschlauch, der Haushaltsgeschirrspülmaschine mittels einer Entleerungspumpe abgepumpt wird. Dadurch kann Wärmeenergie vom Innenraum des Spülbehälters und/oder des mit diesem verbundenen Hydrauliksystems auf die im jeweiligen äußeren Tank gespeicherte Flüssigkeit, insbesondere das im jeweiligen äußeren Tank enthärtete Frischwasser, transferiert werden. Mit anderen Worten ausgedrückt kann die in der gespeicherten Flüssigkeit des jeweiligen äußeren Tanks enthaltene Wärmeenergie angehoben werden, so dass für den nächsten, zweiten Wärmepumpenbetrieb nach einem bereits durchgeführten, ersten Wärmepumpenbetrieb wieder ein höheres Wärmeenergiereservoir im jeweiligen äußeren Tank zur Verfügung steht. Darüber hinaus kann die gegenüber ihrer Einlauftemperatur auf eine höhere Temperatur vorerwärmte Flüssigkeit, insbesondere enthärtetes Frischwasser, im jeweiligen inneren Tank für die Durchführung eines nachfolgenden flüssigkeitsführenden Teilspülgangs in den Spülbehälter und/oder das mit diesem verbundene Hydrauliksystem eingespeist werden, so dass sich ein energetischer Vorteil ergibt.

Im letzten flüssigkeitsführenden Teilspülgang mit aufzuheizender Spülflüssigkeit, was üblicherweise der Klarspülgang ist, findet vorzugsweise keine Befüllung des jeweiligen inneren Tanks mehr statt. Dies wird erst am Ende und/oder während des spülgangabschließenden Trocknungsgangs gemacht, um die jeweilige Wandung des Spülbehälters, die außen mit der Doppeltankanordnung aus innerem Tank und äußerem Tank bestückt ist, gegenüber dem Spülgut im Innenraum des Spülbehälters über die Gesamtzeitdauer des Trocknungsgangs soweit abkühlen zu können, dass auf der Innenseite dieser Wandung des Spülbehälters eine einwandfreie Auskondensation von Feuchtigkeit aus der feuchten und/oder wasserdampfhaltigen Luft im Innenraum des Spülbehälters stattfindet. Diese thermische Kopplung zwischen der Spülbehälterwandung und dem jeweiligen äußeren Tank, der ja durch den vorausgehenden Wärmepumpenbetrieb Eis und/oder Eiswasser enthalten kann, durch Befüllen des inneren Tanks mit Flüssigkeit, insbesondere enthärtetem Frischwasser verbessert den Trocknungsgang gegenüber einer konventionellen Geschirrspülmaschine ohne erfindungsgemäße Wärmepumpenanordnung.

Die Verweildauer der Flüssigkeit im jeweiligen inneren Tank 27 kann gemäß dem Ausführungsbeispiel von Figur 4 vorzugsweise zwischen 10 min (= Minuten) und 20 min, insbesondere um etwa 15 min, liegen, um einen ausreichenden Wärmetransfer in den jeweilig zugeordneten äußeren Tank 28 zum Auftauen von Eis und/oder Erwärmen des Eiswassers um mehrere Grad Celsius, insbesondere um 2 °C bis 10°C, sicherstellen zu können.

Im Rahmen der Erfindung wird unter dem Begriff "aktive Aufheizphase" insbesondere eine Zeitspanne verstanden, während der der jeweiligen Flüssigkeitsmenge, die im Spülbehälter und/oder in dem an diesen angeschlossene Hydrauliksystem zur Durchführung einer Waschphase vorhanden ist, Wärmeenergie zur Erreichen einer gewünschten Solltemperatur positiv zugeführt wird.

### Bezugszeichenliste

- 1: Haushaltsgeschirrspülmaschine,
- 2: Spülbehälter,
- 3: Tür,
- 4: Öffnungsrichtung,
- 5: Gerätekörper,
- 6: Dekorplatte,
- 7: Griffmulde,
- 8: Bedienblende,
- 10: Besteckschublade,
- 11: Geschirrkorb,
- 12: Sockel,
- 13: Wandung,
- 14: bewegliche Wandung,

- 20: Wärmepumpe,
- 21: Verdichter oder Kompressor,
- 22: Fließrichtung,
- 23: Wärmepumpenmedium,
- 24: Verflüssiger bzw. Kondensator,
- 25: Expansionseinrichtung,
- 26: Verdampfer,
- 27: innerer Tank,
- 28: äußerer Tank,

- V: Vorderseite,
- Q: Querrichtung,
- B: Boden,
- t: Zeit,
- T: Temperatur
- SG: Spülgang
- VG: Vorspülgang
- RG: Reinigungsgang
- ZG: Zwischenspülgang
- KG: Klarspülgang
- TG: Trocknungsgang

- APR: erste Aufheizphase
- APK: zweite Aufheizphase
- NWP: Nachwaschphase

## Patentansprüche

1. Haushaltsgeschirrspülmaschine (1) mit einem Spülbehälter (2) zur Aufnahme von Geschirr, Gläsern, Bestecken oder ähnlichem Spülgut, wobei die Haushaltsgeschirrspülmaschine (1) mit zumindest einer während eines Teils eines Spülgangs (SG) betreibbaren Wärmepumpe (20) versehen ist, die einen Verflüssiger (24) und einen Verdampfer (26) in einem von Wärmepumpenmedium (23) durchflossenen Kreislauf umfasst, wobei dem Verdampfer (26) zumindest zwei im Wesentlichen flache Tanks (27, 28) zugeordnet sind, von denen zumindest einer ein innerer Tank (27) zwischen zumindest einem äußeren Tank (28) und dem Spülbehälter (2) ist und entweder bei Befüllung mit Flüssigkeit als Wärmekoppler des äußeren Tanks (28) zum Spülbehälter (2) hin oder bei Befüllung mit Luft als thermischer Isolator des äußeren Tanks (28) zum Spülbehälter (2) hin verwendbar ist, und wobei in dem zumindest einen äußeren Tank (28) Teile des Verdampfers (26) angeordnet sind,
**dadurch gekennzeichnet,**
**dass** der zumindest eine äußere Tank (28) im Spülgang (SG) sämtliche Flüssigkeit, die zu Beginn des während des Spülgangs (SG) erstmaligen Betriebs der Wärmepumpe (20) in ihm enthalten ist, bis zum Ende des Spülgangs (SG) dort behält, wobei die am Ende des Spülgangs (SG) in dem zumindest einen äußeren Tank (28) enthaltene Flüssigkeit zumindest teilweise in einem nächsten Spülgang (SG) als Teil der Spülflotte zu einem Vorspülen des Spülguts nutzbar und dazu in den Spülbehälter (2) einleitbar ist.

2. Haushaltsgeschirrspülmaschine (1) nach Anspruch 1,
**dadurch gekennzeichnet,**
**dass** die Wärmepumpe (20) während des Spülgangs (SG) zumindest zweimal ein- und ausschaltbar ist und ab dem ersten Einschalten sämtliche Flüssigkeit, die zu diesem Zeitpunkt im zumindest einen äußeren Tank (28) enthalten ist, bis zum Ende des Spülgangs (SG) dort behält.

3. Haushaltsgeschirrspülmaschine (1) nach einem der Ansprüche 1 oder 2,
**dadurch gekennzeichnet,**
**dass** nach Verbrauch von Flüssigkeit aus den Tanks (27, 28) zum Vorspülen der äußere Tank während dieses Spülgangs (SG) noch genau einmal mit Flüssigkeit befüllbar ist und diese Flüssigkeit dann bis zum Ende des Spülgangs (SG) hält.

4. Haushaltsgeschirrspülmaschine (1) nach einem der Ansprüche 1 bis 3,
**dadurch gekennzeichnet,**
**dass** die im äußeren Tank (28) wie auch im inneren Tank (27) enthaltene Flüssigkeit zugeführtes Frischwasser nach Durchlauf durch einen Enthärter ist.

5. Haushaltsgeschirrspülmaschine (1) nach einem der Ansprüche 1 bis 4,
**dadurch gekennzeichnet,**
**dass** zu Beginn des Spülgangs alle Tanks (27,28) mit Flüssigkeit befüllt sind, die im Wesentlichen Umgebungstemperatur aufweist.

6. Haushaltsgeschirrspülmaschine (1) nach einem der Ansprüche 1 bis 5,
**dadurch gekennzeichnet,**
**dass** die Wärmepumpe (20) während einer geforderten Aufheizphase (APR, APK) innerhalb eines flüssigkeitsführenden Teilspülgangs (RG, KG) des Spülgangs (SG) in Betrieb ist.

7. Haushaltsgeschirrspülmaschine (1) nach einem der Ansprüche 1 bis 6,
**dadurch gekennzeichnet,**
**dass** die Tanks (27, 28) außerhalb von einer oder mehreren seitlichen Wandungen (13) des Spülbehälters (2) angeordnet sind.

8. Haushaltsgeschirrspülmaschine (1) nach einem der Ansprüche 1 bis 7,
**dadurch gekennzeichnet,**
**dass** der Verdampfer (26) rohrförmig im jeweils äußeren Tank (28) angeordnet ist.

9. Haushaltsgeschirrspülmaschine (1) nach einem der Ansprüche 1 bis 8,
**dadurch gekennzeichnet,**
**dass** die Abläufe zum Befüllen und Entleeren der Tanks (27; 28) in einem Steuerprogramm hinterlegt sind.

10. Haushaltsgeschirrspülmaschine (1) nach einem der Ansprüche 1 bis 9,
**dadurch gekennzeichnet,**
**dass** die Wärmepumpe (20) in zumindest zwei Phasen des Spülgangs (SG) jeweils zur Unterstützung oder Bewirkung einer Erwärmung aktiv ist.

11. Haushaltsgeschirrspülmaschine (1) nach Anspruch 10,
**dadurch gekennzeichnet,**
**dass** die erste Phase zur Unterstützung oder Bewirkung einer Erwärmung ein Teil eines Reinigungsgangs (RG) des Spülgangs (SG) ist.

12. Haushaltsgeschirrspülmaschine (1) nach einem der Ansprüche 10 oder 11,
**dadurch gekennzeichnet,**
**dass** die zweite Phase zur Unterstützung oder Bewirkung einer Erwärmung ein Teil eines Klarspülgangs (KG) oder Trocknungsgangs (TG) des Spülgangs (SG) ist.

13. Haushaltsgeschirrspülmaschine (1) nach einem der Ansprüche 1 bis 12,
**dadurch gekennzeichnet,**
**dass** sowohl einer von der Tür (3) aus linken als auch einer rechten Seitenwand (13) jeweils ein innerer Tank (27) und ein äußerer Tank (28) zugeordnet sind.

14. Haushaltsgeschirrspülmaschine (1) nach einem der Ansprüche 1 bis 13,
**dadurch gekennzeichnet,**
**dass** der oder die innere(n) Tank(s) ein Fassungsvermögen von ca. einem Liter und der oder die äußere(n) Tank(s) ein Fassungsvermögen von ca. vier Litern aufweist oder aufweisen.

15. Verfahren zum Betreiben einer Haushaltsgeschirrspülmaschine (1) mit einem Spülbehälter (2) zur Aufnahme von Geschirr, Gläsern, Bestecken oder ähnlichem Spülgut, wobei die Haushaltsgeschirrspülmaschine (1) mit zumindest einer während eines Teils eines Spülgangs (SG) betreibbaren Wärmepumpe (20) versehen ist, die einen Verflüssiger (24) und einen Verdampfer (26) in einem von Wärmepumpenmedium (23) durchflossenen Kreislauf umfasst, wobei dem Verdampfer (26) zumindest zwei im wesentlichen flache Tanks (27, 28) zugeordnet sind, von denen zumindest einer ein innerer Tank (27) zwischen zumindest einem äußeren Tank (28) und dem Spülbehälter (2) ist und entweder bei Befüllung mit Flüssigkeit als Wärmekoppler des äußeren Tanks (28) zum Spülbehälter (2) hin oder bei Befüllung mit Luft als thermischer Isolator des äußeren Tanks (28) zum Spülbehälter (2) hin verwendbar ist, und wobei in dem zumindest einen äußeren Tank (28) Teile des Verdampfers (26) angeordnet sind,
**dadurch gekennzeichnet,**
**dass** zumindest ein äußerer Tank (28) im Spülgang (SG) mit Flüssigkeit befüllt wird oder ist und sämtliche Flüssigkeit, die zu Beginn des während des Spülgangs (SG) erstmaligen Betriebs der Wärmepumpe (20) im zumindest einen äußeren Tank (28) enthalten ist, bis zum Ende des Spülgangs (SG) dort verbleibt, wobei die am Ende des Spülgangs (SG) in dem zumindest einen äußeren Tank (28) enthaltene Flüssigkeit zumindest teilweise in einem nächsten Spülgang (SG) als Teil der Spülflotte zu einem Vorspülen des Spülguts genutzt und dazu in den Spülbehälter (2) eingeleitet wird.

16. Verfahren nach Anspruch 15,
**dadurch gekennzeichnet,**
**dass** die Wärmepumpe (20) während des Spülgangs (SG) zumindest zweimal ein- und ausgeschaltet wird und ab dem ersten Einschalten der Wärmepumpe (20) sämtliche Flüssigkeit, die zu diesem Zeitpunkt im zumindest einen äußeren Tank (28) enthalten ist, bis zum Ende des Spülgangs (SG) dort behalten wird.

17. Verfahren nach Anspruch 15 oder Anspruch 16,
**dadurch gekennzeichnet,**
**dass** nach Verbrauch von Flüssigkeit aus den Tanks (27, 28) zum Vorspülen der äußere Tank (28) während dieses Spülgangs (SG) noch genau einmal mit Flüssigkeit befüllt wird und diese Flüssigkeit dann bis zum Ende des Spülgangs (SG) hält.

18. Verfahren nach einem der Ansprüche 15 bis 17,
**dadurch gekennzeichnet,**
**dass** sämtliche aus dem inneren Tank (27) abgeführte Flüssigkeit, insbesondere dort zwischengespeichertes enthärtetes Frischwasser, in weiterer Nutzung dem Spülbehälter (2), insbesondere zum Spülen des dort gelagerten Spülguts, zumindest als Teilmenge eines flüssigkeitsführenden Teilspülgangs (VG, RG, ZG, KG) des Spülgangs (SG) zugeführt wird.

19. Verfahren nach einem der Ansprüche 15 bis 18,
**dadurch gekennzeichnet,**
**dass** der jeweilige innere Tank (27) während einer gewünschten Aufheizphase (APR, APK) mindestens eines flüssigkeitsführenden Teilspülgangs, insbesondere des Reinigungsgangs (RG) und/oder Klarspülgangs (KG), des Spülgangs (SG), welche durch Aktivierung der Wärmepumpe (20) unterstützt oder bewirkt wird, mit Luft befüllt ist.

20. Verfahren nach einem der Ansprüche 15 bis 19,
**dadurch gekennzeichnet,**
**dass** nach der während eines flüssigkeitsführenden Teilspülgangs (RG) des Spülgangs (SG) ersten Betriebsphase der Wärmepumpe (20) der jeweilige innere Tank (27) mit Flüssigkeit, insbesondere enthärtetem Frischwasser, während einer nachfolgenden Teilphase, insbesondere Endphase, dieses flüssigkeitsführenden Teilspülgangs und/oder eines nachfolgenden flüssigkeitsführenden Teilspülgangs ( ZG) des Spülgangs (SG) befüllt wird oder befüllt ist, in welcher mittels der Wärmepumpe (20) eine aktive Aufheizung von Spülflüssigkeit, Luft, und/oder Spülgut im Spülbehälter (2) unterbleibt und ein Wärmetransfer vom Spülbehälter (2) auf die im nächsten flüssigkeitsführenden Teilspülgang (ZG, KG) des Spülgangs zu entleerende Flüssigkeit im jeweiligen inneren Tank (27) zu deren Vorerwärmung, und/oder zum Auftauen von Eis oder zum Erwärmen von Eiswasser im jeweiligen äußeren Tank (28) gewünscht ist.

21. Verfahren nach einem der Ansprüche 15 bis 20,
**dadurch gekennzeichnet,**
**dass** der jeweilige innere Tank (27) während der überwiegenden Zeitdauer des Trocknungsgangs (TG) des Spülgangs (SG) mit Flüssigkeit befüllt ist.

## Claims

1. Household dishwasher (1) with a dishwasher cavity (2) for receiving dishes, glasses, cutlery or a similar item to be washed, wherein the household dishwasher (1) is provided with at least one heat pump (20) which can be operated during part of a wash cycle (SG) and which comprises a condenser (24) and an evaporator (26) in a circuit through which heat pump medium (23) flows, wherein at least two essentially flat tanks (27, 28) are assigned to the evaporator (26), of which at least one is an inner tank (27) between at least one outer tank (28) and the dishwasher cavity (2) and can be used either as a heat coupler of the outer tank (28) with respect to the dishwasher cavity (2) when liquid is filled or as a thermal insulator of the outer tank (28) with respect to the dishwasher cavity (2) when air is filled, and wherein parts of the evaporator (26) are arranged in the at least one outer tank (28),
**characterised in that**
during the wash cycle (SG) the at least one outer tank (28) retains all the liquid, which is contained therein at the start of the first operation of the heat pump (20) during the wash cycle (SG) until the end of the wash cycle (SG), wherein the liquid contained in the at least one outer tank (28) at the end of the wash cycle (SG) can be used at least partially in a next wash cycle (SG) as part of the washing liquor in order to prerinse the item to be washed and for this purpose can be introduced into the dishwasher cavity (2).

2. Household dishwasher (1) according to claim 1,
**characterised in that**
the heat pump (20) can be switched on and off at least twice during the wash cycle (SG) and from the first switch-on all liquid, which is contained in the at least one outer tank (28) at this point in time, is retained there until the end of the wash cycle (SG).

3. Household dishwasher (1) according to one of claims 1 to 2,
**characterised in that**
after consuming liquid from the tanks (27, 28) for prerinse purposes, the outer tank can be filled with liquid once again during this wash cycle (SG) and this liquid is then retained until the end of the wash cycle (SG).

4. Household dishwasher (1) according to one of claims 1 to 3,
**characterised in that**
the liquid contained in the outer tank (28) and also in the inner tank (27) is fresh water supplied after passing through a softener.

5. Household dishwasher (1) according to one of claims 1 to 4,
**characterised in that**
all tanks (27, 28) with an essentially ambient temperature are filled with liquid at the start of the wash cycle.

6. Household dishwasher (1) according to one of claims 1 to 5,
**characterised in that**
the heat pump (20) is in operation during a required heating phase (APR, APK) within a liquid-conveying partial wash cycle (RG, KG) of the wash cycle (SG).

7. Household dishwasher (1) according to one of claims 1 to 6,
**characterised in that**
the tanks (27, 28) are arranged outside of one or more lateral walls (13) of the dishwasher cavity (2).

8. Household dishwasher (1) according to one of claims 1 to 7,
**characterised in that**
the evaporator (26) is arranged in the shape of a tube in the respective outer tank (28).

9. Household dishwasher (1) according to one of claims 1 to 8,
**characterised in that**
the processes for filling and emptying the tanks (27; 28) are stored in a control program.

10. Household dishwasher (1) according to one of claims 1 to 9,
**characterised in that**
the heat pump (20) is active in at least two phases of the wash cycle (SG) in each case to support or effect a heating process.

11. Household dishwasher (1) according to claim 10,
**characterised in that**
the first phase for supporting or effecting a heating process is one part of a cleaning cycle (RG) of the wash cycle (SG).

12. Household dishwasher (1) according to one of claims 10 or 11,
**characterised in that**
the second phase for supporting or effecting a heating process is one part of a rinse aid cycle (KG) or drying cycle (TG) of the wash cycle (SG).

13. Household dishwasher (1) according to one of claims 1 to 12,
**characterised in that**
an inner tank (27) and an outer tank (28) are assigned both to a left side wall, viewed from the door (3), and also a right side wall (13).

14. Household dishwasher (1) according to one of claims 1 to 13,
**characterised in that**
the inner tank or tanks has or have a holding capacity of approx. one litre and the outer tank or tanks has or have a holding capacity of approx. four litres.

15. Method for operating a household dishwasher (1) with a dishwasher cavity (2) for receiving dishes, glasses, cutlery or a similar item to be washed, wherein the household dishwasher (1) is provided with at least one heat pump (20) which can be operated during part of a wash cycle (SG) and comprises a condenser (24) and an evaporator (26) in a circuit through which heat pump medium (23) flows, wherein at least two essentially flat tanks (27, 28) are assigned to the evaporator (26), of which at least one is an inner tank (27) between at least one outer tank (28) and the dishwasher cavity (2) and can be used either as a heat coupler of the outer tank (28) with respect to the dishwasher cavity (2) when liquid is filled or as a thermal insulator of the outer tank (28) with respect to the dishwasher cavity (2) when air is filled, and wherein parts of the evaporator (26) are arranged in the at least one outer tank (28),
**characterised in that**
at least one outer tank (28) in the wash cycle (SG) is or will be filled with liquid and all liquid which is contained in the at least one outer tank (28) at the start of the first operation of the heat pump (20) during the wash cycle (SG) remains until the end of the wash cycle (SG), wherein the liquid contained in the at least one outer tank (28) at the end of the wash cycle (SG) is used at least partially in a next wash cycle (SG) as part of the washing liquor for prerinsing the item to be washed and for this purpose is introduced into the dishwasher cavity (2).

16. Method according to claim 15,
**characterised in that**
the heat pump (20) is switched on and off at least twice during the wash cycle (SG) and from the first switch-on of the heat pump (20), all liquid which is contained in at least one outer tank (28) at this point in time is retained there until the end of the wash cycle (SG).

17. Method according to claim 15 or claim 16,
**characterised in that**
after consuming liquid from the tanks (27, 28) for prerinse purposes, during this wash cycle (SG) the outer tank (28) is filled once again with liquid and retains this liquid until the end of the wash cycle (SG).

18. Method according to one of claims 15 to 17,
**characterised in that**
all liquid discharged from the inner tank (27), in particular softened fresh water stored there, is supplied for further use to the dishwasher cavity (2), in particular for rinsing the item to be washed which is stored there, at least as a partial quantity of a liquid-conveying partial rinse cycle (VG, RG, ZG, KG) of the wash cycle (SG).

19. Method according to one of claims 15 to 18,
**characterised in that**
the respective inner tank (27) is filled with air during a desired heat-up phase (APR, APK) of at least one liquid-conveying partial rinse cycle, in particular the cleaning cycle (RG) and/or rinse-aid cycle (KG), of the wash cycle (SG), which is supported or effected by activating the heat pump (20).

20. Method according to one of claims 15 to 19,
**characterised in that**
after the first operating phase of the heat pump (20) during a liquid-conveying partial rinse cycle (RG) of the wash cycle (SG), the respective inner tank (27) is or will be filled with liquid, in particular softened fresh water, during a subsequent partial phase, in particular end phase, of this liquid-conveying partial wash cycle and/or a subsequent liquid-conveying partial wash cycle (ZG) of the wash cycle (SG), in which an active heating of wash liquor, air and/or item to be washed is omitted in the dishwasher cavity (2) by means of the heat pump (20), and a transfer of heat from the dishwasher cavity (2) to the liquid to be emptied in the next liquid-conveying partial wash cycle (ZG, KG) of the wash cycle in the respective inner tank (27) for its preheating and/or for thawing ice and/or for heating ice water is desired in the respective outer tank (28).

21. Method according to one of claims 15 to 20,
**characterised in that**
the respective inner tank (27) is filled with liquid during the prevailing duration of the drying cycle (TG) of the wash cycle (SG).

## Revendications

1. Lave-vaisselle ménager (1) avec une cuve de lavage (2) pour l'accueil de vaisselle, de verres, de couverts ou d'éléments à laver semblables, dans lequel le lave-vaisselle ménager (1) est pourvu d'au moins une pompe à chaleur (20) exploitable durant une partie d'un cycle de lavage (SG), laquelle comprend un condenseur (24) et un évaporateur (26) dans un circuit traversé par un agent de pompe à chaleur (23), dans lequel au moins deux réservoirs essentiellement plats (27, 28) sont affectés à l'évaporateur (26), dont au moins un est un réservoir intérieur (27) entre au moins un réservoir extérieur (28) et la cuve de lavage (2) et utilisable soit, en présence d'un remplissage de fluide, comme coupleur de chaleur du réservoir extérieur (28) en direction de la cuve de lavage (2) ou, en présence d'un remplissage d'air, comme isolateur thermique du réservoir extérieur (28) en direction de la cuve de lavage (2) et dans lequel des parties de l'évaporateur (26) sont disposées dans l'au moins un réservoir extérieur (28), **caractérisé en ce que** lors du cycle de lavage (SG), l'au moins un réservoir extérieur (28) conserve jusqu'à la fin du cycle de lavage (SG) l'ensemble du fluide contenu au début de la première exploitation de la pompe à chaleur (20) durant le cycle de lavage (SG), dans lequel le fluide contenu dans l'au moins un réservoir extérieur (28) à la fin du cycle de lavage (SG) est au moins partiellement utilisable lors d'un prochain cycle de lavage (SG) comme partie du bain de lavage pour un prélavage de la vaisselle et peut être introduit dans la cuve de lavage (2) à cet effet.

2. Lave-vaisselle ménager (1) selon la revendication 1, **caractérisé en ce que** la pompe à chaleur (20) est au moins activable et désactivable deux fois durant le cycle de lavage (SG) et conserve jusqu'à la fin du cycle de lavage (SG), à partir du premier actionnement, l'ensemble du fluide contenu à cet instant dans au moins un réservoir extérieur (28).

3. Lave-vaisselle ménager (1) selon l'une des revendications 1 ou 2, **caractérisé en ce qu'**après la consommation du fluide présent dans les réservoirs (27, 28) pour le prélavage, le réservoir extérieur peut encore être rempli de fluide exactement une fois durant ce cycle de lavage (SG) et retient ensuite ce fluide jusqu'à la fin du cycle de lavage (SG).

4. Lave-vaisselle ménager (1) selon l'une des revendications 1 à 3, **caractérisé en ce que** le fluide contenu dans le réservoir extérieur (28) ainsi que dans le réservoir intérieur (27) est de l'eau fraîche adjointe après avoir traversé un adoucisseur.

5. Lave-vaisselle ménager (1) selon l'une des revendications 1 à 4, **caractérisé en ce qu'**au début du cycle de lavage, l'ensemble des réservoirs (27, 28) sont remplis de fluide essentiellement à température ambiante.

6. Lave-vaisselle ménager (1) selon l'une des revendications 1 à 5, **caractérisé en ce que** la pompe à chaleur (20) est en fonctionnement durant une phase de chauffe requise (APR, APK) au sein d'un cycle de lavage partiel à circulation de fluide (RG, KG) du cycle de lavage (SG).

7. Lave-vaisselle ménager (1) selon l'une des revendications 1 à 6, **caractérisé en ce que** les réservoirs (27, 28) sont disposés en dehors d'une ou de plusieurs parois latérales (13) de la cuve de lavage (2).

8. Lave-vaisselle ménager (1) selon l'une des revendications 1 à 7, **caractérisé en ce que** l'évaporateur (26) est disposé de façon tubulaire dans le réservoir extérieur respectif (28).

9. Lave-vaisselle ménager (1) selon l'une des revendications 1 à 8, **caractérisé en ce que** les processus de remplissage et de vidange des réservoirs (27 ; 28) sont enregistrés dans un programme de commande.

10. Lave-vaisselle ménager (1) selon l'une des revendications 1 à 9, **caractérisé en ce que** la pompe à chaleur (20) est active dans au moins deux phases du cycle de lavage (SG) respectivement afin de soutenir ou de provoquer un échauffement.

11. Lave-vaisselle ménager (1) selon la revendication 10, **caractérisé en ce que** la première phase afin de soutenir ou de provoquer un échauffement est une partie d'un cycle de nettoyage (RG) du cycle de lavage (SG).

12. Lave-vaisselle ménager (1) selon l'une des revendications 10 ou 11, **caractérisé en ce que** la deuxième phase afin de soutenir ou de provoquer un échauffement est une partie d'un cycle de rinçage (KG) ou cycle de séchage (TG) du cycle de lavage (SG).

13. Lave-vaisselle ménager (1) selon l'une des revendications 1 à 12, **caractérisé en ce qu'**un réservoir intérieur (27) et un réservoir extérieur (28) respectifs sont affectés à la fois à une paroi latérale gauche au départ de la porte (3) et à une paroi latérale droite (13).

14. Lave-vaisselle ménager (1) selon l'une des revendications 1 à 13, **caractérisé en ce que** le(s) réservoir(s) intérieur(s) présente(nt) une capacité d'environ un litre et le(s) réservoir(s) extérieur(s) présente(nt) une capacité d'environ quatre litres.

15. Procédé d'exploitation d'un lave-vaisselle ménager (1) avec une cuve de lavage (2) pour l'accueil de vaisselle, de verres, de couverts ou d'éléments à laver semblables, dans lequel le lave-vaisselle ménager (1) est pourvu d'au moins une pompe à chaleur (20) exploitable durant une partie d'un cycle de lavage (SG), laquelle comprend un condenseur (24) et un évaporateur (26) dans un circuit traversé par un agent de pompe à chaleur (23), dans lequel au moins deux réservoirs essentiellement plats (27, 28) sont affectés à l'évaporateur (26), dont au moins un est un réservoir intérieur (27) entre au moins un réservoir extérieur (28) et la cuve de lavage (2) et utilisable soit, en présence d'un remplissage de fluide, comme coupleur de chaleur du réservoir extérieur (28) en direction de la cuve de lavage (2) ou, en présence d'un remplissage d'air, comme isolateur thermique du réservoir extérieur (28) en direction de la cuve de lavage (2) et dans lequel des parties de l'évaporateur (26) sont disposées dans l'au moins un réservoir extérieur (28), **caractérisé en ce que** lors du cycle de lavage (SG), au moins un réservoir extérieur (28) est rempli de fluide et l'ensemble du fluide contenu dans au moins un réservoir extérieur (28) au début de la première exploitation de la pompe à chaleur (20) durant le cycle de lavage (SG) y demeure jusqu'à la fin du cycle de lavage (SG), dans lequel le fluide contenu dans l'au moins un réservoir extérieur (28) à la fin du cycle de lavage (SG) est au moins partiellement utilisé lors d'un prochain cycle de lavage (SG) comme partie du bain de lavage pour un prélavage de la vaisselle et est introduit dans la cuve de lavage (2) à cet effet.

16. Procédé selon la revendication 15, **caractérisé en ce que** la pompe à chaleur (20) est au moins activée et désactivée deux fois durant le cycle de lavage (SG) et à partir du premier actionnement de la pompe à chaleur (20), l'ensemble du fluide contenu à cet instant dans au moins un réservoir extérieur (28) y est conservé jusqu'à la fin du cycle de lavage (SG).

17. Procédé selon la revendication 15 ou 16, **caractérisé en ce qu'**après la consommation du fluide présent dans les réservoirs (27, 28) pour le prélavage, le réservoir extérieur (28) est encore rempli de fluide exactement une fois durant ce cycle de lavage (SG) et retient ensuite ce fluide jusqu'à la fin du cycle de lavage (SG).

18. Procédé selon l'une des revendications 15 à 17, **caractérisé en ce que** l'ensemble du fluide évacué au départ du réservoir intérieur (27), en particulier l'eau fraîche adoucie stockée temporairement à cet endroit, est adjointe à la cuve de lavage (2) lors de l'utilisation suivante, en particulier pour le lavage de la vaisselle qui s'y trouve, au moins sous forme de quantité partielle d'un cycle de lavage partiel à circulation de fluide (VG, RG, ZG, KG) du cycle de lavage (SG).

19. Procédé selon l'une des revendications 15 à 18, **caractérisé en ce que** le réservoir intérieur respectif (27) est rempli d'air durant une phase de chauffe souhaitée (APR, APK) d'au moins un cycle de lavage partiel à circulation de fluide, en particulier du cycle de nettoyage (RG) et/ou du cycle de rinçage (KG), du cycle de lavage (SG), soutenu ou provoqué par l'activation de la pompe à chaleur (20).

20. Procédé selon l'une des revendications 15 à 19, **caractérisé en ce qu'**après la première phase d'exploitation de la pompe à chaleur (20) durant un cycle de lavage partiel à circulation de fluide (RG) du cycle de lavage (SG), le réservoir intérieur respectif (27) est rempli de fluide, en particulier d'eau fraîche adoucie, durant une phase partielle suivante, en particulier une phase finale, de ce cycle de lavage partiel à circulation de fluide et/ou d'un cycle de lavage partiel à circulation de fluide (ZG) suivant du cycle de lavage (SG), dans lequel un chauffage actif au moyen de la pompe à chaleur (20) du fluide de lavage, de l'air et/ou de la vaisselle dans la cuve de lavage (2) n'a pas lieu et un transfert de chaleur de la cuve de lavage (2) vers le fluide présent dans le réservoir intérieur respectif (27) à vidanger durant le prochain cycle de lavage partiel à circulation de fluide (ZG, KG) du cycle de lavage est souhaité afin de le préchauffer et/ou de faire fondre de la glace ou d'échauffer de l'eau glacée dans le réservoir extérieur respectif (28).

21. Procédé selon l'une des revendications 15 à 20, **caractérisé en ce que** le réservoir intérieur respectif (27) est rempli de fluide durant la majeure partie de la durée du cycle de séchage (TG) du cycle de lavage (SG).
